# EUROPEAN PATENT SPECIFICATION

(11) **EP 0 330 110 B1**
(45) Date of publication and mention of the grant of the patent: **28.08.1996**
(21) Application number: 89102869.8
(22) Date of filing: 21.02.1989
(51) Int. Cl.: G06F 13/28

(54) **Direct memory access controller**
Direktspeicherzugriffssteuerung
Dispositif de commande d'accès direct de mémoire

(30) Priority: 25.02.1988 JP 42998/88; 09.03.1988 JP 55898/88; 09.03.1988 JP 55900/88
(43) Date of publication of application: 30.08.1989
(73) Proprietor: FUJITSU LIMITED, Kawasaki-shi, Kanagawa 211 (JP); FUJITSU DEVICES INC, Chiyoda-Ku, Tokyo (JP)
(72) Inventor: Iino, Hideyuki, Yokohama-shi Kanagawa, 226 (JP); Yoshitake, Akihiro, Kawasaki-shi Kanagawa, 211 (JP); Hida, Hedenori, Yokohama-shi Kanagawa, 226 (JP)
(74) Representative: Seeger, Wolfgang, Dipl.-Phys.

(56) References cited:
- DE-A- 3 301 628
- ELEKTRONIK, vol. 35, no. 22, October 1986, pages 182-186, Munich, DE; M. JURAN: "32-Bit-Chipfamilie für UNIX-Systeme konzipiert"
- PATENT ABSTRACTS OF JAPAN, vol. 11, no. 62 (P-551)[2509] 25th February 1987 & JP-A-61 224 063
- ELECTRONICS INTERNATIONAL, vol. 53, no. 3, January 1980, pages 81-88, New York, US; J. KISTER et al.: "Development system supports today's processors-and tomorrow's"
- PATENT ABSTRACTS OF JAPAN, vol. 12, no. 51 (P-667)[2898] 16th February 1988 & JP-A-62 197 853

## Description

### BACKGROUND OF THE INVENTION

The present invention generally relates to direct memory access controllers, and more particularly to a direct memory access controller for controlling a direct memory access in which data is transferred directly between a memory device and an input/output interface or another memory device at a high speed during a time when a central processing unit forfeits exclusive right to a system bus of a data processing apparatus having the central processing unit.

In a data processing apparatus such as a computer system, a direct memory access controller (DMAC) is used to reduce a data transfer time between a memory and an input/output (I/O) interface which are coupled to a common system bus. According to the direct memory access (DMA), the data can be transferred directly between the memory and the I/O interface under a control of the DMAC without passing the data through a central processing unit (CPU) which is used as a peripheral device coupled to the system bus.

On the other hand, a data processing apparatus having two mutually independent system buses is conceivable when considering a data processing apparatus having further improved functions. When making a data transfer between two devices which are coupled to the two mutually independent system buses, first-in-first-out (FIFO) buffers or dual port random access memories (RAMs) are used. However, in order to make a data transfer at a high speed in such a data processing apparatus having two mutually independent system buses, there is a demand to realize a DMA between the two system buses.

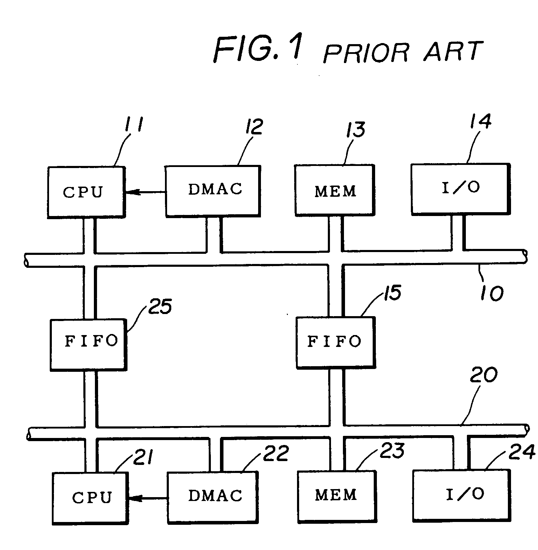

FIG.1 shows an example of a data processing apparatus capable of making a DMA transfer between two system buses. In FIG.1, a central processing unit (CPU) 11, a DMAC 12, a memory 13 and an input/output (I/O) interface 14 are coupled to a system bus 10 and constitute a first system. In addition, a CPU 21, a DMAC 22, a memory 23 and an I/O interface 24 are coupled to a system bus 20 and constitute a second system. FIFO buffers 15 and 25 are provided between the system buses 10 and 20. The FIFO buffer 15 is used for the transfer of messages between the CPUs 11 and 21, while the FIFO buffer 25 is used for the data transfer between the system buses 10 and 20.

For example, when making a DMA transfer from the memory 23 to the memory 13, the DMAC 22 first obtains the right of use of the system bus 20 from the CPU 21 and writes the data from the memory 23 into the FIFO buffer 25. The DMAC 12 obtains the right of use of the system bus 10 depending on a transfer request from the FIFO buffer 25 and writes the data from the FIFO buffer 25 into the memory 13.

According to this data processing apparatus, there is a need to provide the two DMACs 12 and 22 and the two FIFO buffers 15 and 25. But because the FIFO buffers 15 and 25 are bidirectional devices, a large number of peripheral circuits are required including a controller and the like for controlling the FIFO buffers 15 and 25. Moreover, the DMA transfer between the system buses 10 and 20 is made through the FIFO buffer 25 and the DMACs 12 and 22 and the FIFO buffer 25 are in a handshaking state thereby making the efficiency of the data transfer poor. Furthermore, no single transfer can be made between the two system buses 10 and 20 since no path is provided between the system buses 10 and 20 for transferring a request from an I/O interface which is coupled to one system bus to a memory device which is coupled to the other system bus.

In the data processing apparatus having two or more mutually independent system buses, a bus master must be coupled to each system bus for the administration thereof. And when making an adjustment and the like of the operation of the data processing apparatus as a whole, message communications must be made among the bus masters.

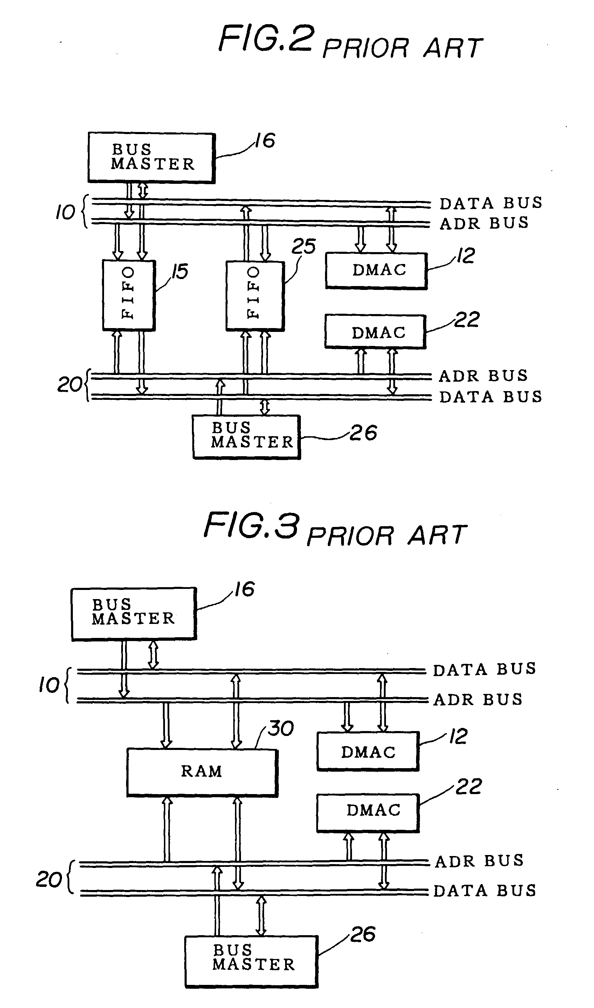

FIG.2 shows the bus masters together with an essential part of the data processing apparatus shown in FIG.1. In FIG.2, those parts which are the same as those corresponding parts in FIG.1 are designated by the same reference numerals, and a description thereof will be omitted. In FIG.2, a bus master 16 is coupled to a data bus and an address bus constituting the system bus 10, while a bus master 26 is coupled to a data bus and an address bus constituting the system bus 20. The messages from the bus masters 16 and 26 are respectively stored in the FIFO buffers 15 and 25, and the message communication is made when the bus masters 16 and 26 respectively read out the messages from the FIFO buffers 15 and 25. In this case, an external circuit must be provided to inform the bus masters 16 and 26 when the messages are written into the FIFO buffers 15 and 25, and there are problems in that the number of required parts increases in terms of the hardware and that the system design becomes complex.

FIG.3 shows the bus masters together with an essential part of another example of a conventional data processing apparatus. In FIG.3, those parts which are the same as those corresponding parts in FIG.2 are designated by the same reference numerals, and a description thereof will be omitted. In FIG.3, a dual port random access memory (RAM) 30 is provided in place of the FIFO buffers 15 and 25, and the message communications are made when the bus masters 16 and 26 respectively make access to the dual port RAM 30. In this case, an external circuit must also be provided to inform the bus masters 16 and 26 when the messages are written into the dual port RAM 30, and there are problems in that the number of required parts increases in terms of the hardware and that the system design becomes complex.

It is thus conceivable to control the DMA transfer between two system buses by use of a single DMAC. However, the conventional DMAC is originally designed to control the DMA transfer on a single system bus, and for this reason, control signals including a read/write signal and the like which are required for the DMA transfer can only be outputted to a device which is coupled to the single system bus. Hence, in order to make the DMA transfer between two mutually independent system buses, it is necessary to provide a control circuit for outputting the control signals which are required for the DMA transfer between the two system buses.

Therefore, according to the conventional data processing apparatus employing two DMACs, there is a problem in that no single transfer can be made between the two mutually independent system buses. On the other hand, according to the conceivable data processing apparatus which employs a single DMAC, a control circuit having a complex circuit construction for outputting the control signals which are required for the DMA transfer must be provided between the two mutually independent system buses in order to make a single transfer between the two mutually independent system buses, and there is a problem in that the construction of the data processing apparatus becomes complex.

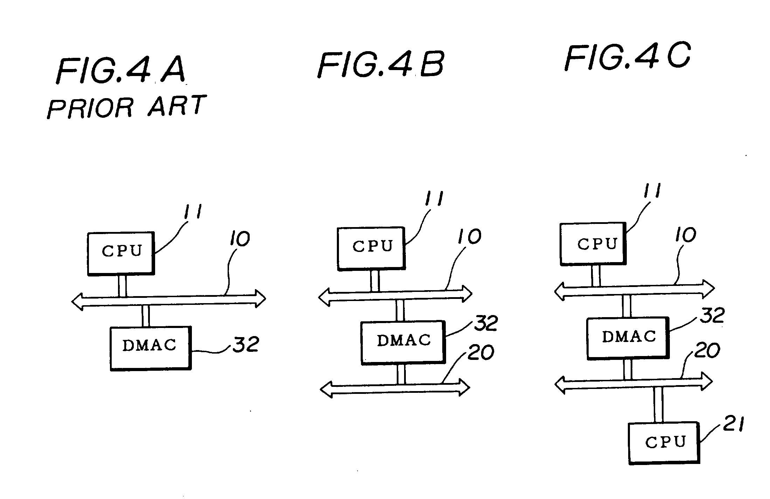

FIG.4A shows an essential part of the conventional data processing apparatus employing a first system in which a DMAC 32 is only coupled to the system bus 10 to which the CPU 11 is coupled. FIG.4B shows an essential part of the conceivable data processing apparatus employing a second system in which the DMAC 32 is also coupled to the system bus 20 to which no CPU is coupled. FIG.4C shows an essential part of the conceivable data processing apparatus employing a third system in which the DMAC 32 is coupled to both the system bus 10 to which the CPU 11 is coupled and the system bus 20 to which the CPU 21 is coupled. When the same DMAC 32 is applied to the data processing apparatuses employing the first, second and third systems, it is necessary to switch over the internal operation of the DMAC 32 depending on the system. It is thus conceivable to provide external terminals on the DMAC 32 for receiving a mode signal which designates the mode of the internal operation (that is, selected system) and supply a fixed mode signal from a printed circuit board on which the DMAC 32 is provided. But in this case, it is necessary to change the printed circuit board on which the DMAC 32 is provided when the first system is extended to the second or third system. As a result, there are problems in that the system cannot be extended by simply adding a printed circuit board having the system bus 20 or the system bus 20 and the CPU 21, and the system cannot be extended with ease.

On the other hand, when the DMAC 32 has a plurality of channels, all of the channels are controlled by the CPU 11 in the first and second systems but in the case of the third system a designation must be made on whether each channel is to be controlled by the CPU 11 or 21. Hence, it is also necessary in this case to change the printed circuit board on which the DMAC 32 is provided when extending the first or second system to the third system, and the system cannot be extended with ease.

From ELERTRONIK, vol. 35, #22, Oktober 1986, pages 182 - 186, Munich, DE; M. JURAN: "32-Bit-Chipfamilie für UNIX-Systeme konzipiert", a DMA controller connected to two independent buses is known. However, the transfer must be made via the DMA controller, and for this reason, no buffer control is carried out for the address data or the like between the two buses and a single transfer between the two buses cannot be made. Further, there is no message communication function between the two buses by using a communication buffer and a CPU cannot be connected to each of the two buses.

### SUMMARY OF THE INVENTION

Accordingly, it is a general object of the present invention to provide a novel and useful direct memory access controller (DMAC) in which the problems described heretofore are eliminated by enabling control of a direct memory access (single transfer or dual transfer) between two mutually independent system buses with a single DMAC and by enabling support of various systems with the single DMAC. The various systems include a system wherein a CPU and the DMAC are coupled to a single system bus, a system wherein a CPU is coupled to a first system bus and the DMAC is coupled to the first system bus and a second system bus which is independent of the first system bus, and a system wherein two CPUs are respectively coupled to first and second system buses and the DMAC is coupled to the first and second system buses.

Another and more specific object of the present invention is to provide a direct memory access controller adapted to control a direct memory access in a data processing apparatus which includes at least first and second system buses which are mutually independent, at least one memory device coupled to the first system bus, at least one input/output interface coupled to the second system bus, a central processing unit coupled to at least one of the first and second system buses and buffer means for controlling data and address transfer and direction of the data and address transfer between the first and second system buses. The direct memory access controller comprises bus and terminal controller means coupled to the first and second system buses for obtaining a right to use the first and second system buses responsive to a transfer request received from one of the memory device and the input/output interface, interrupt and slave controller means coupled to the first and second system buses for controlling an interrupt to the central processing unit and for controlling an access from the central processing unit, and operation determination means for determining an operation of the direct memory access controller depending on the transfer request received from the one of the memory device and the input/output interface, whether or not the bus and terminal controller means obtained the right to use the first and second system buses and whether or not the access is made from the central processing unit. The operation determination means controls the bus and terminal controller means, the buffer means and the interrupt and slave controller means based on the operation determined thereby so as to make a single transfer between the memory device and the input/output interface responsive to the transfer request. According to the direct memory access controller of the present invention, the efficiency of the data transfer is improved, and it is possible to make a direct memory access transfer between the first and second system buses without making the construction of the data processing apparatus complex.

Still another object of the present invention is to provide a direct memory access controller adapted to control a direct memory access in a data processing apparatus which includes at least first and second system buses which are mutually independent, first and second memory devices respectively coupled to the first and second system buses, first and second input/output interfaces respectively coupled to the first and second system buses, a central processing unit coupled to at least one of the first and second system buses and buffer means for controlling data and address transfer and direction of the data and address transfer between the first and second system buses. The direct memory access controller comprises bus and terminal controller means coupled to the first and second system buses for obtaining a right to use the first and second system buses responsive to a transfer request received from one of the first and second memory devices and the first and second input/output interfaces, interrupt and slave controller means coupled to the first and second system buses for controlling an interrupt to the central processing unit and for controlling an access from the central processing unit, and operation determination means for determining an operation of the direct memory access controller depending on the transfer request received from the one of the first and second memory devices and the first and second input/output interfaces, whether or not the bus and terminal controller means obtained the right to use the first and second system buses and whether or not the access is made from the central processing unit. The operation determination means controls the bus and terminal controller means, the buffer means and the interrupt and slave controller means based on the operation determined thereby so as to make a direct memory access transfer between arbitrary two out of the first and second memory devices and the first and second input/output interfaces responsive to the transfer request.

A further object of the present invention is to provide a direct memory access controller adapted to control a direct memory access in a data processing apparatus which includes at least first and second system buses which are mutually independent, first and second memory devices respectively coupled to the first and second system buses, first and second input/output interfaces respectively coupled to the first and second system buses, first and second central processing units respectively coupled to the first and second system buses and buffer means for controlling data and address transfer and direction of the data and address transfer between the first and second system buses. The direct memory access controller comprises bus and terminal controller means coupled to the first and second system buses for obtaining a right to use the first and second system buses responsive to a transfer request received from one of the first and second memory devices and the first and second input/output interfaces, interrupt and slave controller means coupled to the first and second system buses for controlling an interrupt to one of the first and second the central processing units and for controlling an access from the one of the first and second central processing units, and operation determination means for determining an operation of the direct memory access controller depending on the transfer request received from the one of the first and second memory devices and the first and second input/output interfaces, whether or not the bus and terminal controller means obtained the right to use the first and second system buses and whether or not the access is made from the one of the first and second central processing units. The operation determination means controls the bus and terminal controller means, the buffer means and the interrupt and slave controller means based on the operation determined thereby so as to make a direct memory access transfer between arbitrary two out of the first and second memory devices and the first and second input/output interfaces responsive to the transfer request.

Other objects and further features of the present invention will be apparent from the following detailed description when read in conjunction with the accompanying drawings.

### BRIEF DESCRIPTION OF THE DRAWINGS

FIG.1 is a system block diagram showing an example of a conventional data processing apparatus capable of making a DMA transfer between two system buses;
FIG.2 is a system block diagram showing bus masters together with an essential part of the data processing apparatus shown in FIG.1;
FIG.3 is a system block diagram showing bus masters together with an essential part of another example of the conventional data processing apparatus;
FIG.4A is a system block diagram showing an essential part of the conventional data processing apparatus employing a first system in which a DMAC is only coupled to a system bus to which a CPU is coupled;
FIG.4B is a system block diagram showing an essential part of the conceivable data processing apparatus employing a second system in which the DMAC is also coupled to another system bus to which no CPU is coupled;
FIG.4C is a system block diagram showing an essential part of the conceivable data processing apparatus employing a third system in which the DMAC is coupled to both the system bus to which the CPU is coupled and the other system bus to which another CPU is coupled;
FIG.5 is a system block diagram showing a first embodiment of a DMAC according to the present invention;
FIG.6 is a system block diagram showing an embodiment of a communication register of the DMAC shown in FIG.5;
FIG.7 is a system block diagram showing an embodiment of a status buffer and interrupt generating circuit of the communication register shown in FIG.6;
FIGS.8(A) through 8(S) are timing charts for explaining a slave′operation of the DMAC shown in FIG.5;
FIGS.9(A) through 9(T) and FIGS.10(A) through 10(T) are timing charts for explaining a single transfer controlled by the DMAC shown in FIG.5;
FIGS.11(A) through 11(T) and FIGS.12(A) through 12(K) are timing charts for explaining a dual transfer controlled by the DMAC shown in FIG.5;
FIG.13 is a system block diagram showing an essential part of a data processing apparatus applied with the first embodiment of the DMAC according to the present invention for explaining an operating principle thereof;
FIG.14 is a system block diagram showing the essential part of the data processing apparatus applied with the first embodiment of the DMAC in more detail;
FIG.15 is a system block diagram showing an essential part of the data processing apparatus when making a single transfer on a single system bus;
FIGS.16(A) through 16(L) are timing charts for explaining the operation of the block systems shown in FIGS.15 and 17 when making the single transfer on the single system bus;
FIG.17 is a diagram for explaining a single transfer from a memory device to an input/output interface which are coupled to one system bus;
FIG.18 is a diagram for explaining a single transfer from an input/output interface to a memory device which are coupled to another system bus;
FIG.19 is a diagram for explaining a single transfer from a memory device coupled to one system bus to an input/output interface coupled to another system bus;
FIGS.20(A) through 20(L) are timing charts for explaining the operation of the block systems shown in FIGS.19 and 21 when making the single transfer between the two system buses;
FIG.21 is a diagram for explaining a single transfer from an input/output interface coupled to one system bus to a memory device coupled to another system bus;
FIG.22 is a system block diagram showing an embodiment of a terminal controller the DMAC shown in FIG.5;
FIG.23 is a system block diagram showing an essential part of another data processing apparatus applied with the first embodiment of the DMAC according to the present invention;
FIG.24 is a circuit diagram showing an embodiment of data buffers of the data processing apparatus shown in FIG.23;
FIG.25 is a system block diagram showing a data processing apparatus employing a first system and applied with a second embodiment of the DMAC according to the present invention;
FIG.26 is a system block diagram showing a data processing apparatus employing a second system and applied with the second embodiment of the DMAC according to the present invention;
FIG.27 is a system block diagram showing the second embodiment of the DMAC according to the present invention;
FIG.28 is a system block diagram showing an embodiment of a bus structure determination part of the DMAC shown in FIG.27;
FIG.29 is a perspective view showing an embodiment of a system rack which holds the DMAC shown in FIG.27; and
FIG.30 is a block diagram showing the DMAC according to the present invention produced in a form of a large scale integrated circuit.

### DETAILED DESCRIPTION

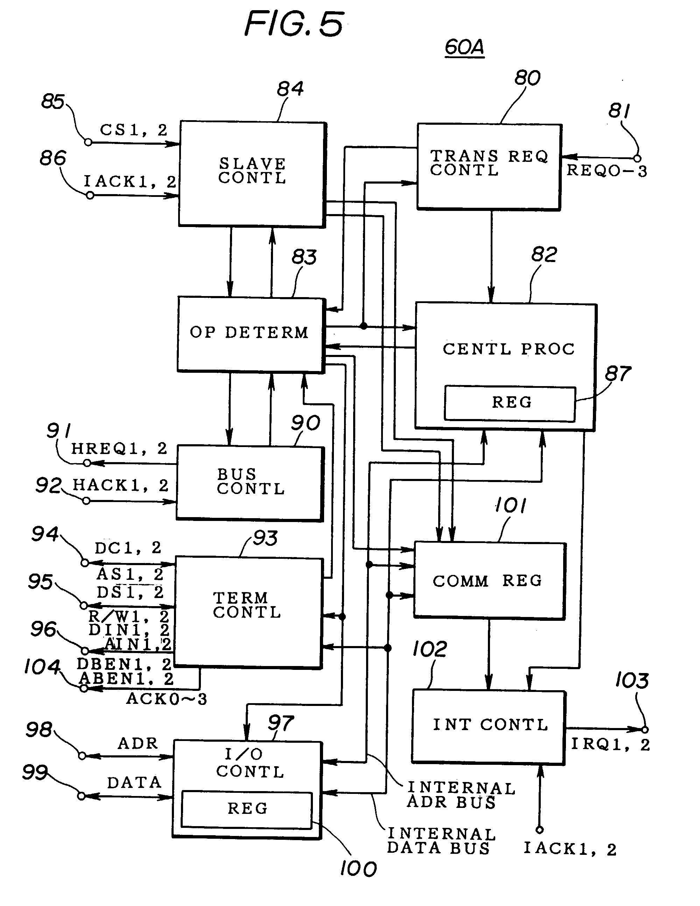

FIG.5 shows a first embodiment of the DMAC according to the present invention. In a DMAC 60A, a transfer request controller 80 receives at a terminal 81 transfer requests REQ0 through REQ3 which are obtained from the memory devices 41 and 51 and the I/O interfaces 42 and 52 through the control buses 40c and 50c. Even when a plurality of transfer requests are received at the same time, the transfer request controller 80 selects one transfer request in conformance with a priority sequence which is determined in advance and reports the selected transfer request to a central processor 82 and an operation determination part 83. The operation determination part 83 makes a response to the reported transfer request.

A slave controller 84 receives at terminals 85 and 86 chip select signals CS1 and CS2 and interrupt request acknowledge signals IACK1 and IACK2 which are obtained from the CPUs 43 and 53 through the control buses 40c and 50c. The chip select signals CS1 and CS2 are signals which are used by the CPUs 43 and 53 to make access to a register 87 or a communication register 101 which will be described later. The interrupt request acknowledge signals IACK1 and IACK2 are signals which are outputted from the CPUs 43 and 53 in acknowledgement when the DMAC 60A makes an interrupt request to the CPUs 43 and 53. Even when a plurality of such signals are received at the same time, the slave controller 84 selects one signal in conformance with a priority sequence which is determined in advance and reports the selected signal to the operation determination part 83. In other words, the slave controller 84 controls the read/write cycle of the CPU and the interrupt acknowledge cycle, and such a control operation is referred to as a slave operation (or cycle). The slave operation is carried out only with respect to the system bus which can receive the signals CS and IACK due to the bus structure and the bus attribute.

The operation determination part 83 reports to the slave controller 84 whether or not a slave access can be made in response to the reported signal from the slave controller 84. In addition, the operation determination part 83 transmits the report from the slave controller 84 to the central processor 82. Further, the operation determination part 83 supplies to the communication register 101 a bus attribute signal which indicates whether the slave access is from the system bus 40 or 50. The slave controller 84 which receives the report that the slave access is possible generates a read request signal or a write request signal and supplies the generated signal to the central processor 82 and the communication register 101. In other words, the operation determination part 83 determines the operation by arbitrating the primary factors of the operation of the DMAC 60A such as the transfer request and the slave request.

The central processor 82 carries out an administration of the total operating state of the DMAC 60A, and the operating state and the operating request are reported to the operation determination part 83. A source address, a destination address, block number and the like required for the transfer are stored in the register 87 within the central processor 82. In other words, the central processor 82 carries out microcontrol, control of the transfer information by PLA, and calculation of the address and the number of transfer bytes. In addition, the register 87 stores information such as the address and the number of transfer bytes.

When a bus request is received from the central processor 82, the operation determination part 83 outputs an instruction to a bus controller 90 so that the bus controller 90 supplies bus request signals HREQ1 and HREQ2 to the CPUs 43 and 53 through a terminal 91. Bus request acknowledge signals HACK1 and HACK2 which are respectively outputted from the CPUs 43 and 53 in response to the bus request signals HREQ1 and HREQ2 are received at a terminal 92 and supplied to the bus controller 90. The bus controller 90 reports the bus request acknowledge signals HACK1 and HACK2 to the operation determination part 83 and this report is transmitted to the central processor 82. Hence, the bus controller 90 controls the operation of obtaining the right to use the system bus from the CPU (bus master) for the purpose of making the DMA transfer.

A terminal controller 93 receives the data complete signals DC1 and DC2 which are respectively received at a terminal 94 from the control buses 40c and 50c. The data complete signals DC1 and DC2 indicate the completion of the data write or read operation. The terminal controller 93 reports the data complete signals DC1 and DC2 to the operation determination part 83 and also outputs the data complete signals DC1 and DC2 through the terminal 94 in response to an instruction from the operation determination part 83. In addition, the terminal controller 93 receives the read/write signals R/W1 and R/W2 which are respectively received at a terminal 95 from the control buses 40c and 50c. The terminal controller 93 reports the read/write signals R/W1 and R/W2 to the operation determination part 83. In addition, the terminal controller 93 outputs the address strobe signals AS1 and AS2, the data strobe signals DS1 and DS2 and the read/write signals R/W1 and R/W2 through the terminal 95 in response to an instruction from the operation determination part 83. Furthermore, the terminal controller 93 supplies the control signals AIN1, AIN2, ABEN1, ABEN2, DIN1, DIN2, DBEN1 and DBEN2 to the address buffers 61a and 61b and the data buffers 62a and 62b through a terminal 96 and outputs the data transfer acknowledge signal ACK through a terminal 104 in response to an instruction from the operation determination part 83. Therefore, the terminal controller 93 controls the terminals which are coupled to the external operation control system and the external buffer control system, and restricts the output operation, input timing and the like of the terminals depending on the transfer, slave, bus structure and the like.

An input/output controller 97 supplies the address from the address buffers 61a and 61b received at a terminal 98 to the register 87 within the central processor 82 and to the communication register 101 in response to an instruction from the operation determination part 83. The input/output controller 97 also supplies the address from the central processor 82 to the address buffers 61a and 61b through the terminal 98. In addition, the input/output controller 97 supplies the data from the data buffers 62a and 62b received at a terminal 99 to the register 87 and to the communication register 101, and supplies the data from the register 77 or the communication register 101 to the data buffers 62a and 62b through the terminal 99. Moreover, the transfer data at the time of a dual transfer is stored in a data holding register 100 within the input/output controller 97. In other words, the input/output controller 97 controls the output of the address and the input and output of the data, and the data holding register 100 is used for the data input and output of the transfer descriptor.

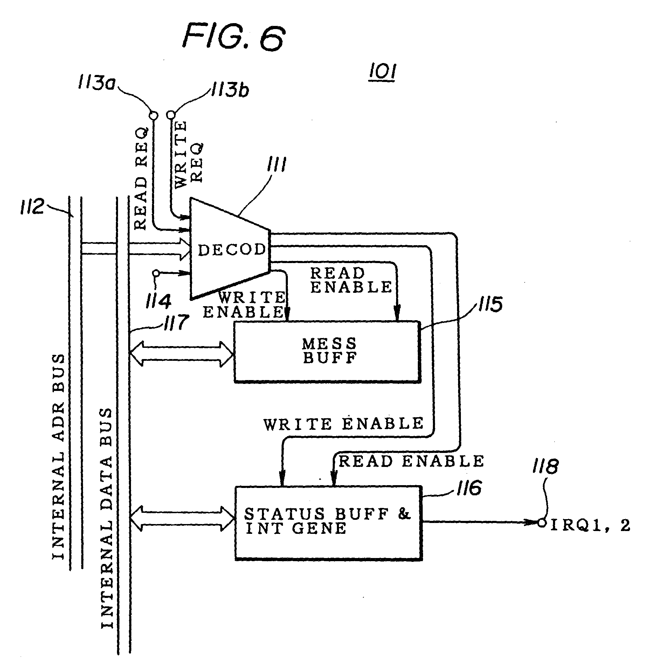

The communication register 101 stores the communication message between the CPUs 43 and 53. In other words, the communication between the CPUs 43 and 53 is made through the communication register 101. FIG.6 shows an embodiment of the communication register 101. The communication register 101 generally has a decoder 111, a message buffer 115 and a status buffer and interrupt generating circuit 116 which are connected as shown. The address from an internal address bus 112 is supplied to the decoder 111. The decoder 111 is also supplied with the read request signal and the write request signal from the slave controller 84 through respective terminals 113a and 113b. The bus attribute signal from the operation determination part 83 is also supplied to the decoder 111 through a terminal 114. The decoder 111 decodes the received signals and supplies a read enable signal and a write enable signal to the message buffer 115 and the status buffer and interrupt generating circuit 116.

The message buffer 115 is coupled to an internal data bus 117 and writes and reads the message from the CPU 43 or 53 responsive to the write enable signal and the read enable signal.

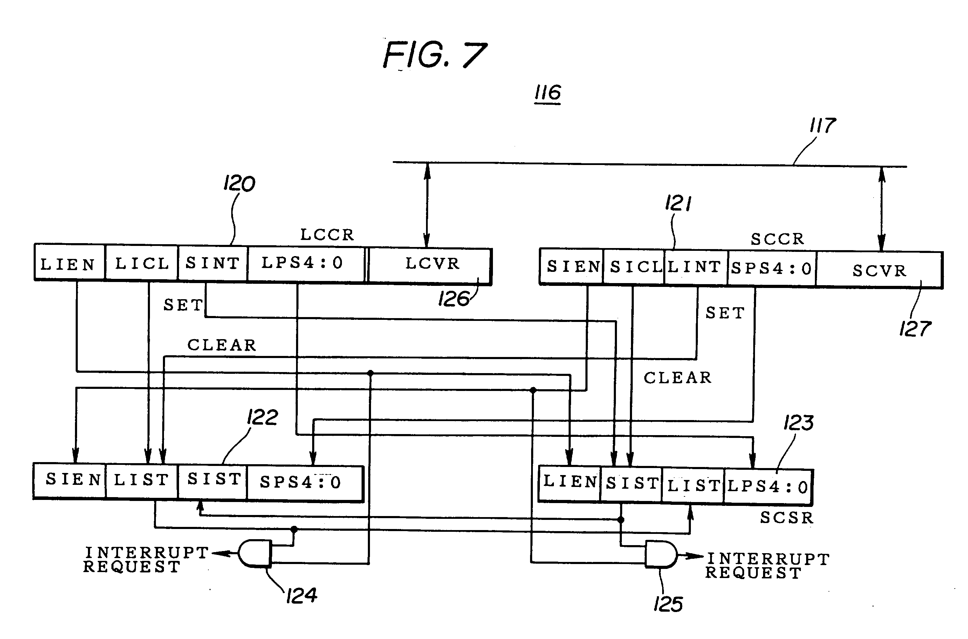

The status buffer and interrupt generating circuit 116 is coupled to the internal data bus 117 and may have a construction shown in FIG.7. In FIG.7, a 4-bit status LPS and control bits LIEN, LICL and SINT from the CPU 43 are written into an LCCR buffer 120. A 4-bit status SPC and control bits SIEN, SICL and LINT from the CPU 53 are written into an SCCR buffer 121. The control bits LIEN and SIEN are interrupt enable bits, the control bits LINT and SINT are interrupt request bits, and the control bits LICL and SICL are interrupt clear bits for clearing the interrupt request.

The content of an LCSR buffer 122 is read out by the CPU 43, and the content of an SCSR buffer 123 is read out by the CPU 53. The corresponding contents of the SCCR buffer 121 are set in a control bit SIEN and status SPS of the LCSR buffer 122. The control bit LINT of the SCCR buffer 121 is set in a control bit LIST, and the control bit LIST is cleared by the control bit LICL of the LCCR buffer 120. In addition, the corresponding content of an SCSR buffer 123 is set in an interrupt status bit SIST. On the other hand, the SCSR buffer 123 is set similarly by the contents of the LCCR buffer 120 and the SCCR buffer 121.

An AND circuit 124 generates an interrupt request signal with respect to the CPU 43 based on the control bit LIEN of the LCCR buffer 120 and the interrupt status bit LIST of the LCSR buffer 122. An AND circuit 125 generates an interrupt request signal with respect to the CPU 53 based on the control bit SIEN of the SCCR buffer 121 and the interrupt status bit SIST of the SCSR buffer 123. The interrupt request signals from the AND circuits 124 and 125 are obtained from a terminal 118 shown in FIG.6 and supplied to the interrupt controller 102 shown in FIG.5.

Interrupt vectors with respect to the CPUs 43 and 53 are respectively stored in an LCVR buffer 126 and an SCVR buffer 127. These interrupt vectors are respectively read out by the CPUs 43 and 53.

Returning now to the description of FIG.5, the interrupt request signal for data transfer obtained from the central processor 82 and the interrupt request signal for communication obtained from the communication register 101 are supplied to the interrupt controller 102, and the interrupt controller 102 generates an interrupt request IRQ1 with respect to the CPU 43 and an interrupt IRQ2 with respect to the CPU 53. The interrupt controller 102 supplies the interrupt requests IRQ1 and IRQ2 to the respective CPUs 43 and 53 through a terminal 103 responsive to an instruction from the central processor 82. In other words, the interrupt controller 102 recognizes the various interrupts and controls the interrupt requests IRQ1 and IRQ2 at the terminal 103. Further, the interrupt controller 102 also discriminates whether the interrupts are normal or abnormal.

For example, the CPU 43 sets the message in the message buffer 115 shown in FIG.6 and sets the control bit SINT of the LCCR buffer 120 shown in FIG.7 to make an interrupt request with respect to the CPU 53. When the control bit SIEN of the SCCR buffer 121 is set by the CPU 53 in this state, an interrupt request signal is outputted from the AND circuit 125 and is supplied to the CPU 53 through the interrupt controller 102.

When the CPU 53 receives the interrupt request, the CPU 53 asserts the interrupt request acknowledge signal IACK2 and executes an interrupt acknowledge cycle.

Accordingly, the CPU 53 reads the content of the SCSR buffer 123 and recognizes that there is an interrupt from the CPU 43. The CPU 53 also recognizes from the content of the status LPS that there is a request to receive a message. Hence, the CPU 53 reads and receives the content of the message buffer 115.

Thereafter, the CPU 53 sets the control bit SICL of the SCCR buffer 121 and clears the interrupt status bits SIST of the LCSR buffer 122 and the SCSR buffer 123 to then move to the normal process.

The message communication is made from the CPU 43 to the CPU 53 by the series of operations described heretofore.

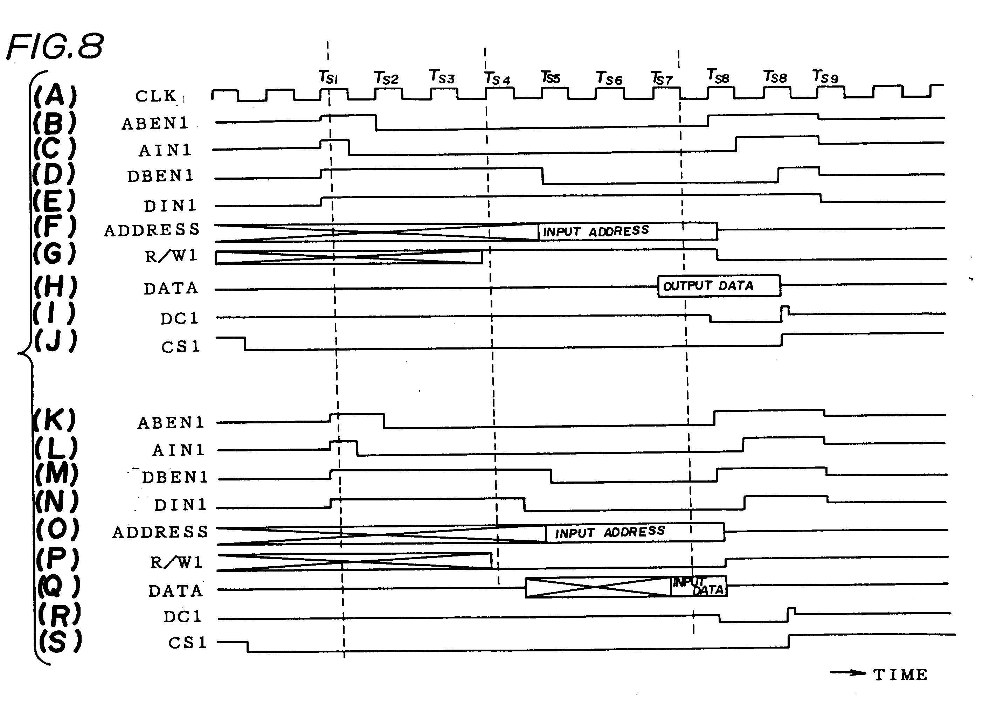

Next, a description will be given of a slave operation in which the CPUs 43 and 53 make access to the register 87 or the communication register 101 of the DMAC 60A. FIGS.8(A) through 8(J) are timing charts for explaining the operation of the DMAC 60A during a read operation, and FIGS.8(K) through 8(S) are timing charts for explaining the operation of the DMAC 60A during a write operation.

A clock signal CLK shown in FIG.8(A) is supplied to the DMAC 60A. During the read operation, the DMAC 60A enters the slave mode when a low-level chip select signal CS1 shown in FIG.8(J) is received from the CPU 43 and sets the control signals ABEN1 and AIN1 respectively shown in FIGS.8(B) and 8(C) to low levels in a cycle T_{S1} to enter the address shown in FIG.8(F) from the CPU 43. In addition, the DMAC 60A sets the control signal DBEN1 shown in FIG.8(D) to a low level and the control signal DINl shown in FIG.8(E) to a high level in a cycle T_{S4} responsive to a high-level read/write signal R/W1 shown in FIG.8(G). Accordingly, the data shown in FIG.8(H) read out from the registers 87 and 101 are outputted from the DMAC 60A and the DMAC 60A outputs the data complete signal DC1 shown in FIG.8(I).

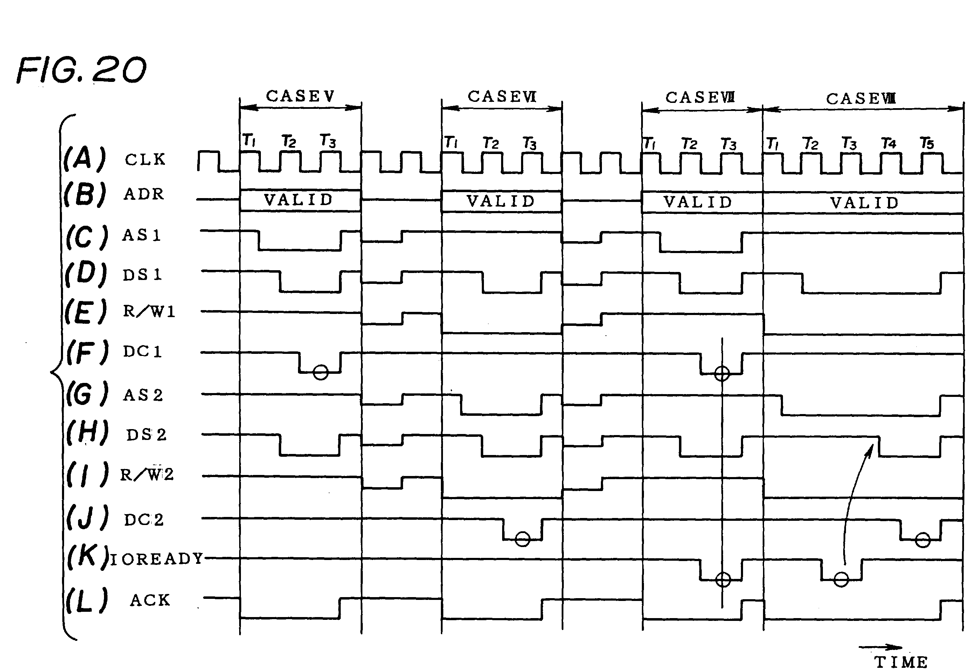

During the write operation, the DMAC 60A sets the control signals DBEN1 and DIN1 respectively shown in FIGS.8(M) and 8(N) to low levels responsive to the a low-level read/write signal R/W1 shown in FIG.8(P). The data received from the CPU 43 is written at the address in the register 87 or the communication register 101 supplied from the CPU 43. FIGS.8(K) and 8(L) respectively show the control signals ABEN1 and AIN1, and FIG.20(O) shows the address. FIGS.8(Q), 8(R) and 8(S) respectively show the data, the data complete signal DC1 and the chip select signal CS1.

Next, a description will be given of a single transfer controlled by the DMAC 60A where a direct data transfer is made between the memory devices 41 and 51 and the I/O interfaces 42 and 52 without passing through the data holding register 100.

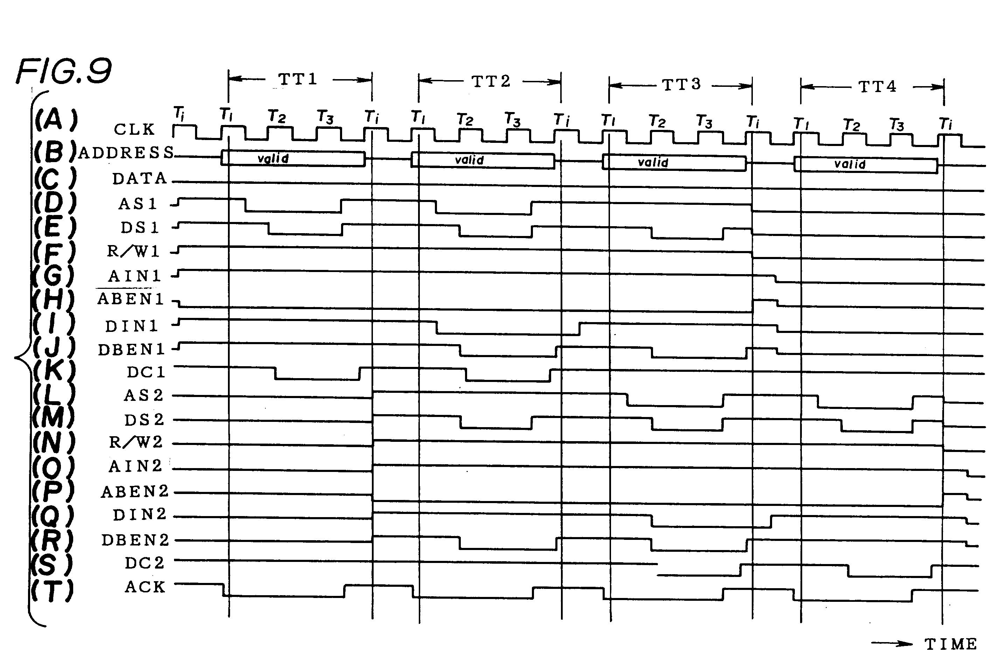

When there is a transfer request for transferring data from the memory device 41 to the I/O interface 42, the DMAC 60A outputs the address shown in FIG.9(B), the address strobe signal AS1 shown in FIG.9(D), the data strobe signal DS1 shown in FIG.9(E) and the read/write signal R/W1 shown in FIG.9(F) with respect to the memory device 41 and the I/O interface 42 in synchronism with the clock signal CLK shown in FIG.9(A) responsive to an instruction from the operation determination part 83. In addition, the DMAC 60A outputs the data transfer acknowledge signal ACK shown in FIG.9(T) with respect to the I/O interface 42.

In this state, the control signals AIN1, ABEND1, DIN1 and DBEN1 are respectively as shown in FIGS.9(G), 9(H), 9(I) and 9(J). Hence, the data read out from the memory device 41 is transferred to the I/O interface 42 and the data complete signal DC1 shown in FIG.9(K) is outputted from the memory device 41 which is the source in this case. The input and output of data to and from the DMAC 60A is prohibited in this case as shown in FIG.9(C). The above described operation is carried out in a time TT1.

In a time TT2 in which a data transfer is made from the memory device 41 to the I/O interface 52 through the system buses 40 and 50, the control signals DIN1 and DBEN1 respectively have low levels as shown in FIGS.9(I) and 9(J) and the control signals AIN2, ABEN2, DIN2 and DBEN2 respectively are as shown in FIGS.9(O), 9(P), 9(Q) and 9(R). In addition, the address strobe signal AS2, the data strobe signal DS2 and the read/write signal R/W2 respectively are as shown in FIGS.9(L), 9(M) and 9(N). Hence, the data read out from the memory device 41 is transferred to the I/O interface 52.

In a time TT3 in which a data transfer is made from the memory device 51 to the I/O interface 42, the memory device 51 which is the source in this case supplies the data complete signal DC2 shown in FIG.9(S) to the DMAC 60A.

A time TT4 in FIGS.9(A) through 9(T) indicates a time in which a data transfer is made from the memory device 51 to the I/O interface 52.

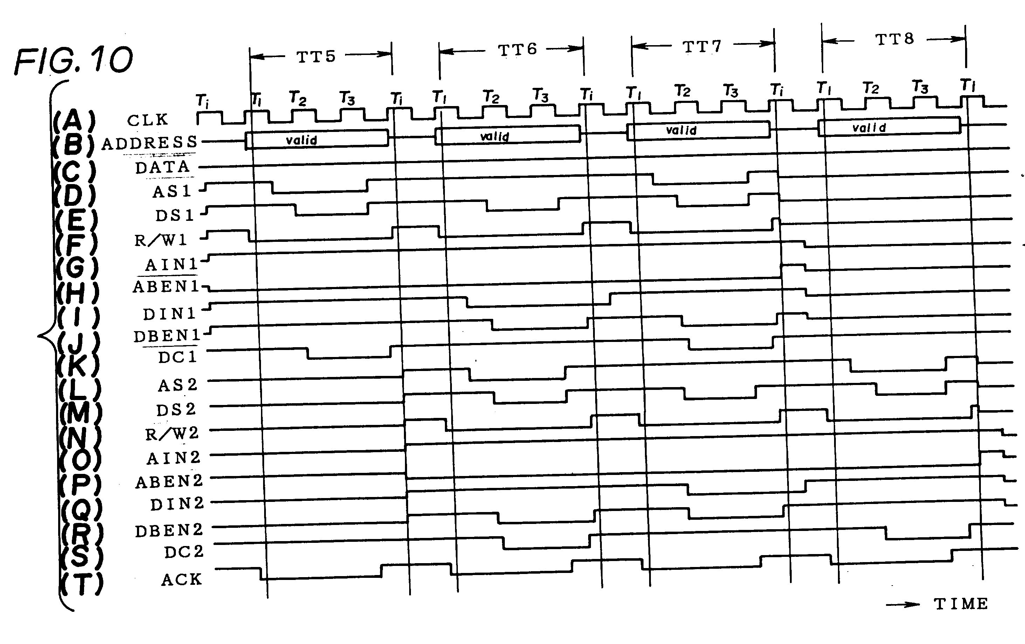

FIGS.10(A) through 10(T) are timing charts showing signals respectively corresponding to the signals shown in FIGS.9(A) through 9(T). A time TT5 indicates a time in which a data transfer is made from the I/O interface 42 to the memory device 41, and a time TT6 indicates a time in which a data transfer is made from the I/O interface 42 to the memory device 51. Furthermore, a time TT7 indicates a time in which a data transfer is made from the I/O interface 52 to the memory device 41, and a time TT8 indicates a time in which a data transfer is made from the I/O interface 52 to the memory device 51.

Next, a description will be given of a dual transfer controlled by the DMAC 60A where a direct data transfer is made between the memory devices 41 and 51 and the I/O interfaces 42 and 52 through the data holding register 100.

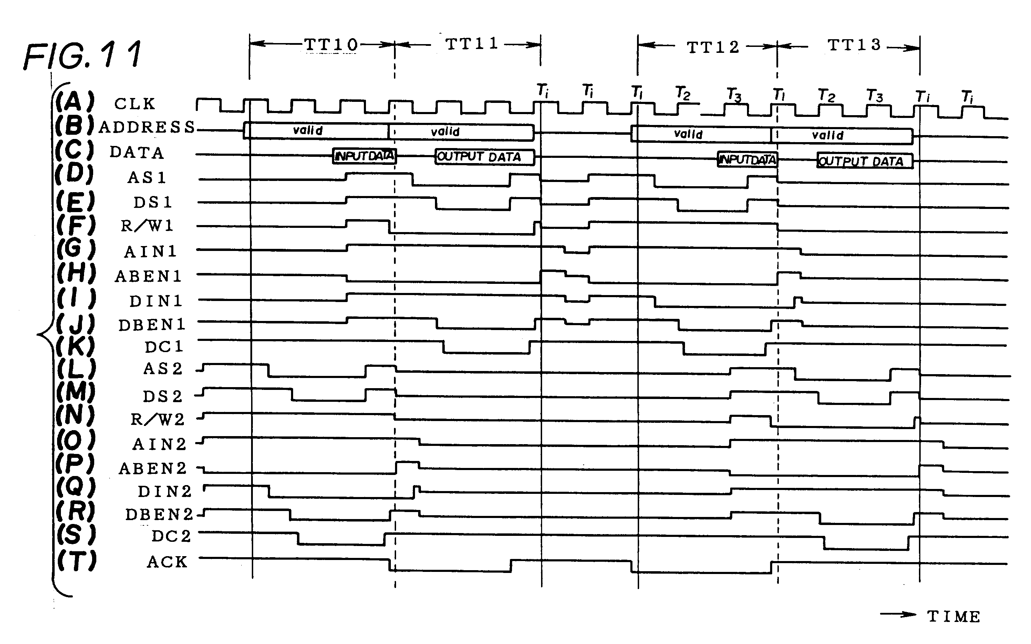

In a time TT10 shown in FIGS.11(A) through 11(T), the DMAC 60A reads out the data from the memory 51 and writes the data into the data holding register 100.

Next, in a time TT11, the DMAC 60A reads out the data from the data holding register 100 and supplies the data to the I/O interface 42. The address in this case has a value indicating the I/O interface 42.

Similarly, the DMAC 60A reads out the data from the I/O interface 42 in a time TT12, and writes the data into the memory 51 in a time TT13. FIGS.11(A) through 11(T) respectively show signals corresponding to the signals shown in FIGS.9(A) through 9(T).

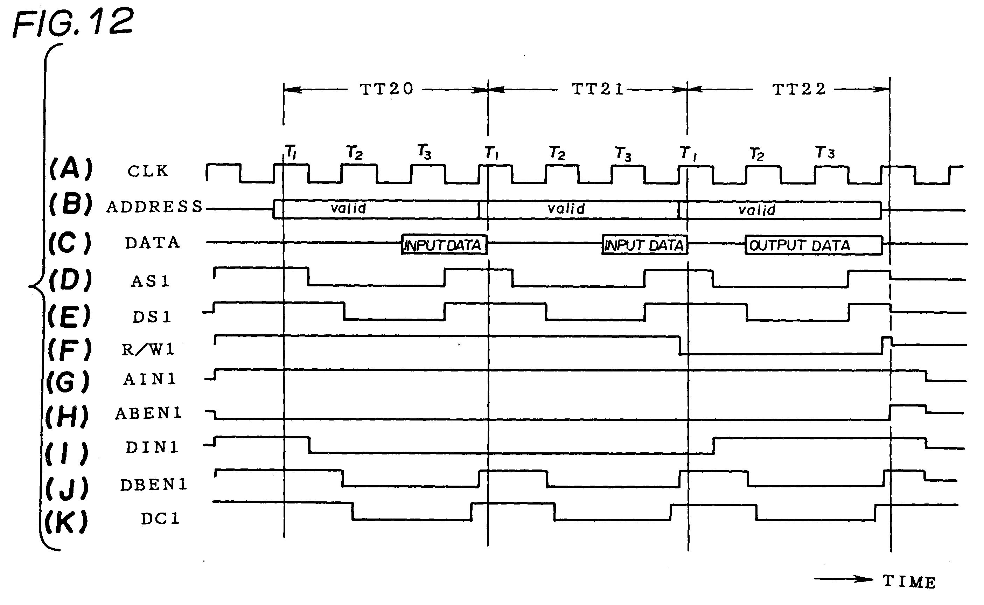

When it is assumed for convenience' sake that the input and output to and from the memory device 41 are carried out in units of sixteen bits, the data bus 40b has thirty-two bits and the input and output to and from a 32-bit memory device (not shown) coupled to the system bus 40 are carried out in units of thirty-two bits, the DMAC 60A carries out the control with the timings shown in FIGS.12(A) through 12(K) when making the dual transfer.

In a time TT20 shown in FIGS.12(A) through 12(K), the DMAC 60A reads out from the memory device 41 the data in which one word is made up of sixteen bits and writes the data into the data holding register 100. In addition, in a time TT21, the DMAC 60A reads out from the memory device 41 the data in which one word is made up of sixteen bits and writes the data into the data holding register 100.

Next, in a time TT22, the DMAC 60A reads out from the data holding register 100 the data (two words) made up of thirty-two bits and writes the thirty-two bits into the 32-bit memory. FIGS.12(A) through 12(K) respectively show signals corresponding to the signals shown in FIGS.9(A) through 9(K).

Therefore, no FIFO buffer nor peripheral circuits are required to support the single and dual transfers in the data processing apparatus having two mutually independent system buses. Furthermore, in the case of the single transfer, the transfer efficiency is high because the transfer in the time TT2 using the system buses 40 and 50 can be made with the same speed as the transfer in the time TT1 using only the system bus 40.

Therefore, because the DMAC 60A is provided with the slave controller 84 and the status buffer and interrupt generating circuit 116 in addition to the message buffer 115, the message communication between the CPUs 43 and 53 can be made under the control of the DMAC 60A without the need to add an external circuit. As a result, from the point of the hardware the number of required parts is small, and the design of the data processing apparatus is facilitated.

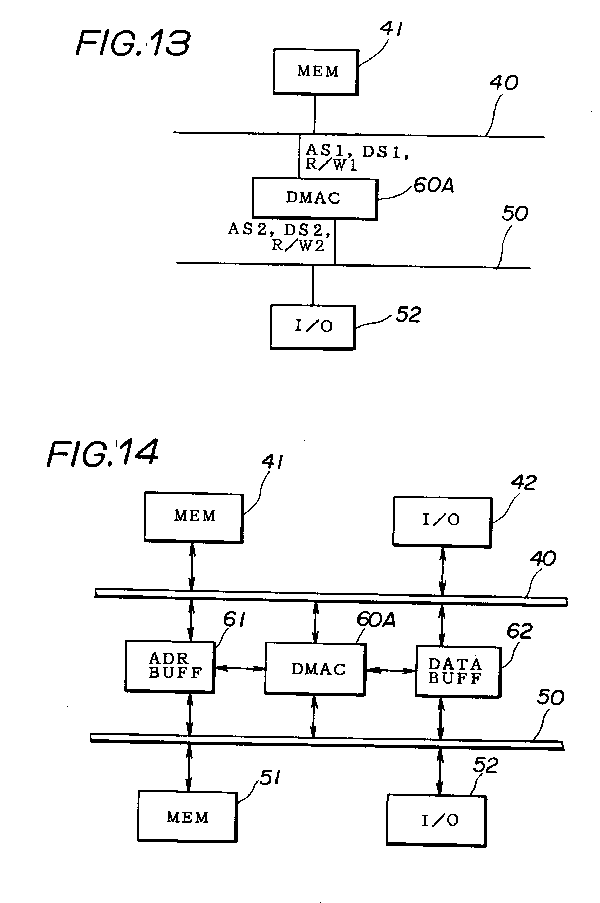

FIG.13 shows an essential part of a data processing apparatus applied with the first embodiment of the DMAC according to the present invention for explaining an operating principle thereof. The data processing apparatus includes two mutually independent system buses 40 and 50, a memory device 41 coupled to the system bus 40, and an input/output (I/O) interface 52 coupled to the system bus 50. The DMAC 60A is coupled between the two system buses 40 and 50 to control a DMA transfer on each of the system buses 40 and 50 and a DMA transfer between the two system buses 40 and 50.

When making a single transfer from the memory device 41 to the I/O interface 52 through the two system buses 40 and 50, the DMAC 60A outputs on the system bus 40 a first address strobe signal AS1, a first data strobe signal DS1 and a first read/write signal R/W1 which instructs a read operation intended for the memory device 41. In addition, the DMAC 60A outputs on the system bus 50 a second data strobe signal DS2 and a second read/write signal R/W2 which instructs a read operation intended for the I/O interface 52.

On the other hand, when making a single transfer from the I/O interface 52 to the memory device 41 through the two system buses 50 and 40, the DMAC 60A outputs on the system bus 50 a second data strobe signal DS2 and a second read/write signal R/W2 which instructs a write operation intended for the I/O interface 52. In addition, the DMAC 60A outputs on the system bus 40 first address strobe signal AS1, a first data strobe signal DS1 and a first read/write signal R/W1 which instructs a write operation intended for the memory device 41.

Accordingly, it is possible to make a single transfer between the two independent system buses 40 and 50 without making the construction of the data processing apparatus complex.

FIG.14 shows the essential part of the data processing apparatus applied with the first embodiment of the DMAC in more detail. In FIG.14, those parts which are the same as those corresponding parts in FIG.13 are designated by the same reference numerals. The mutually independent system buses 40 and 50 are respectively made up of an address bus, a data bus and a control bus. The memory device 41, an I/O interface 42, a central processing unit (CPU, not shown) and the like are coupled to the system bus 40. Similarly, a memory device 51, the I/O interface 52, a CPU (not shown) and the like are coupled to the system bus 50. The DMAC 60A is coupled to the address buses of the system buses 40 and 50 through a bidirectional address buffer 61 and is coupled to the data buses of the system buses 40 and 50 through a bidirectional data buffer 62. In addition, the DMAC 60A is coupled directly to the control buses of the system buses 40 and 50. Accordingly, the DMAC 60A outputs an address to the system bus 40 or 50 by supplying to the address buffer 61 a control signal for controlling the ON/OFF state of the address buffer 61 and a control signal for controlling the direction of signal transfer. The address is outputted on the system bus to which the memory device making the transfer is coupled. Similarly, the DMAC 60A supplies to the data buffer 62 a control signal for controlling the ON/OFF state of the data buffer 62 and a control signal for controlling the direction of signal transfer so as to enable a data transfer between the system buses 40 and 50.

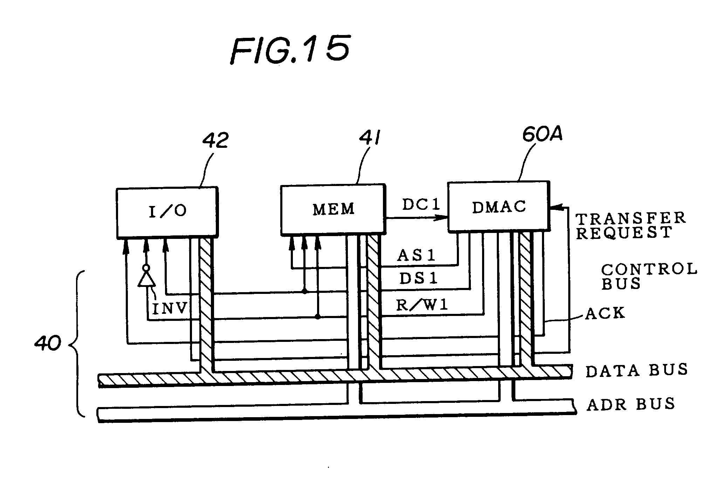

First, a description will be given of an operation of the data processing apparatus when making a single transfer on one system bus. For convenience' sake, it is assumed that a single transfer is made on the system bus 40 from the memory device 41 to the I/O interface 42. FIG.15 shows an essential part of the data processing apparatus for explaining this single transfer.

In FIG.15, when the DMAC 60A receives a transfer request from the I/O interface 42, the DMAC 60A outputs a transfer address intended for the memory device 41 on the address bus of the system bus 40. In addition, the DMAC 60A outputs an address strobe signal AS1, a data strobe signal DS1 and a read/write signal R/W1 intended for the memory device 41 on the control bus of the system bus 40 to start the transfer. At the same time, the DMAC 60A outputs an acknowledge signal ACK intended for the I/O interface 42 on the control bus of the system bus 40. The I/O interface 42 is controlled by use of the control signals which are outputted with respect to the memory device 41. In other words, the read/write signal R/W1 obtained from the control bus of the system bus 40 and intended for the memory device 41 is inverted by an inverter INV and is supplied to the I/O interface 42. The DMAC 60A is informed of an end of the communication when a data complete signal DC1 from the memory device 41 is obtained through the control bus of the system bus 40.

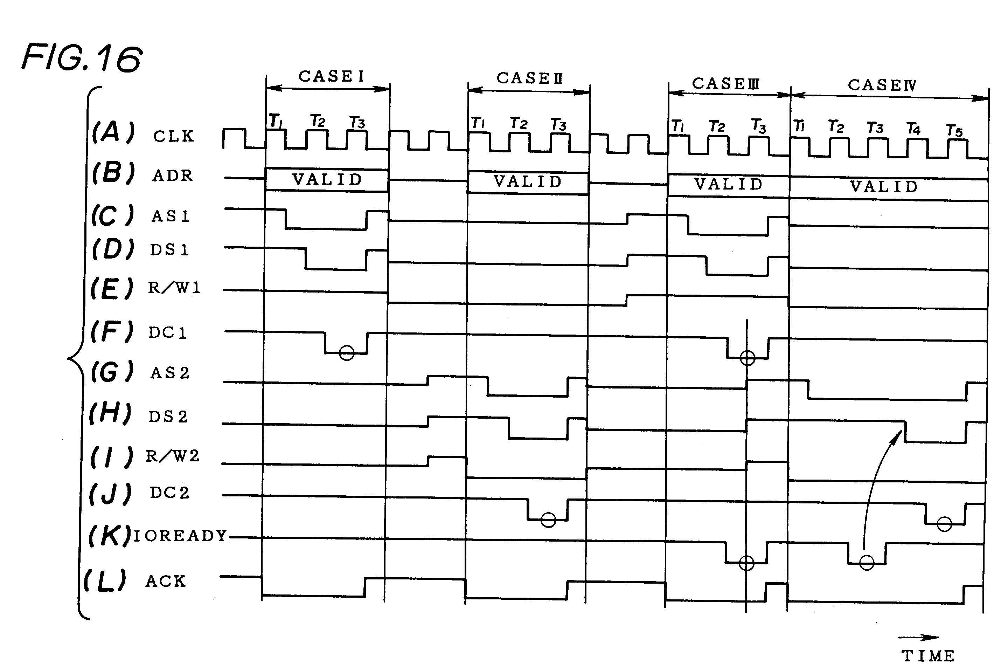

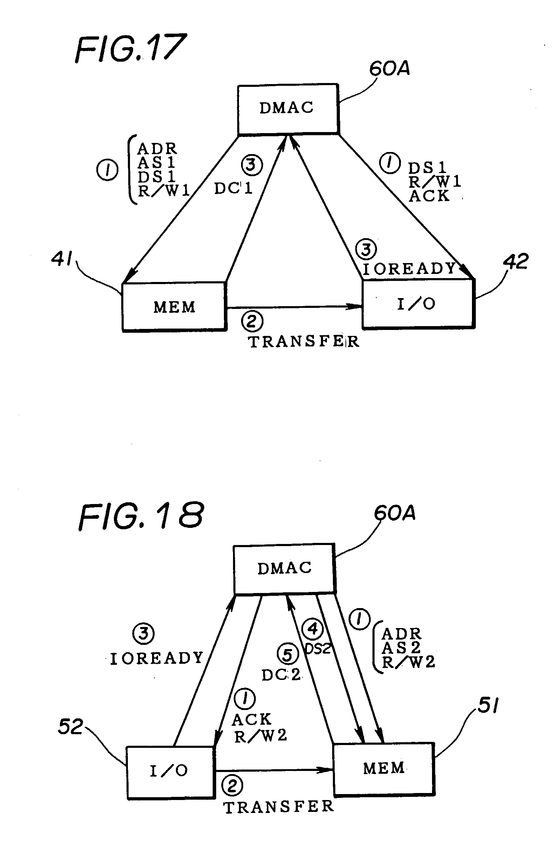

FIGS.16(A) through 16(L) are timing charts for explaining the operation of the block system shown in FIG.15 and FIG.17 which will be described later when making the single transfer on the single system bus. A case I shows the timings of the various signals for the above described case, where FIGS.16(A) and 16(B) respectively show a system clock signal CLK and a transfer address ADR and FIGS.16(C) through 16(F) respectively show the signals AS1, DS1, R/W1 and DC1. Further, FIG.16(L) shows the acknowledge signal ACK.

A case II shows the timings of the various signals for the case where a single transfer is made on the system bus 50 from the I/O interface 52 to the memory device 51. FIGS.16(G) through 16(J) respectively show an address strobe signal AS2, a data strobe signal DS2, a read/write signal R/W2 and a data complete signal DC2 which are intended for the memory device 51 and outputted on the system bus 50 from the DMAC 60A. Since the operation of the data processing apparatus in this case II is similar to the case I described above, a detailed description thereof will be omitted.

It was described heretofore that the DMAC 60A outputs the acknowledge signal ACK with respect to the I/O interfaces 42 and 52. Next, descriptions will be given of cases where the I/O interfaces 42 and 52 additionally have the function of outputting a ready signal. FIG.17 is a diagram for explaining a single transfer from the memory device 41 to the I/O interface 42, and FIG.18 is a diagram for explaining a single transfer from the I/O interface 52 to the memory device 51.

When making the single transfer from the memory device 41 to the I/O interface 42, the transfer address ADR is supplied from the DMAC 60A to the memory device 41 under the control of the DMAC 60A and the signals AS1, DS1 and R/W1 are supplied from the DMAC 60A to the memory device 41 as indicated by ① in FIG.17. In addition, the DMAC 60A supplies the signals DS1 and R/W1 and the acknowledge signal ACK to the I/O interface 42 as indicated by ①. Hence, the data from the memory device 41 is transferred to the I/O interface 42 as indicated by ②. Thereafter, the memory device 41 outputs the data complete signal DC1 with respect to the DMAC 60A and the I/O interface 42 outputs the ready signal IOREADY with respect to the DMAC 60A as indicated by ③. The timings of the various signals in this case are shown as a case III in FIGS.16(A) through 16(L). FIG.16(K) shows the ready signal IOREADY. In this case, the DMAC 60A ends the transfer by simultaneously monitoring the data complete signal DC1 and the ready signal IOREADY.

When making the single transfer from the I/O interface 52 to the memory device 51, the transfer address ADR is supplied from the DMAC 60A to the memory device 51 under the control of the DMAC 60A and the signals AS2 and R/W2 are supplied from the DMAC 60A to the memory device 51 as indicated by ① in FIG.18. In addition, the DMAC 60A supplies the signal R/W2 and the acknowledge signal ACK to the I/O interface 52 as indicated by ①. Hence, the data from the I/O interface 52 is transferred to the memory device 51 as indicated by ②. Next, the I/O interface 52 outputs the ready signal IOREADY with respect to the DMAC 60A as indicated by ③. Thereafter, when the DMAC 60A receives the ready signal IOREADY, the DMAC 60A supplies the data strobe signal DS2 to the memory device 51 as indicated by ④ and the memory device 51 supplies the data complete signal DC2 to the DMAC 60A as indicated by ⑤. The timings of the various signals in this case are shown as a case IV in FIGS.16(A) through 16(L). In this case, the DMAC 60A ends the transfer when the data complete signal DC2 is received from the memory device 51.

The data strobe signal of the I/O interface 42 (52) may be generated differently depending on the data processing apparatus, and for example, the data strobe signal may be generated based on the acknowledge signal ACK and the read/write signal R/W1 (R/W2) outputted from the DMAC 60A.

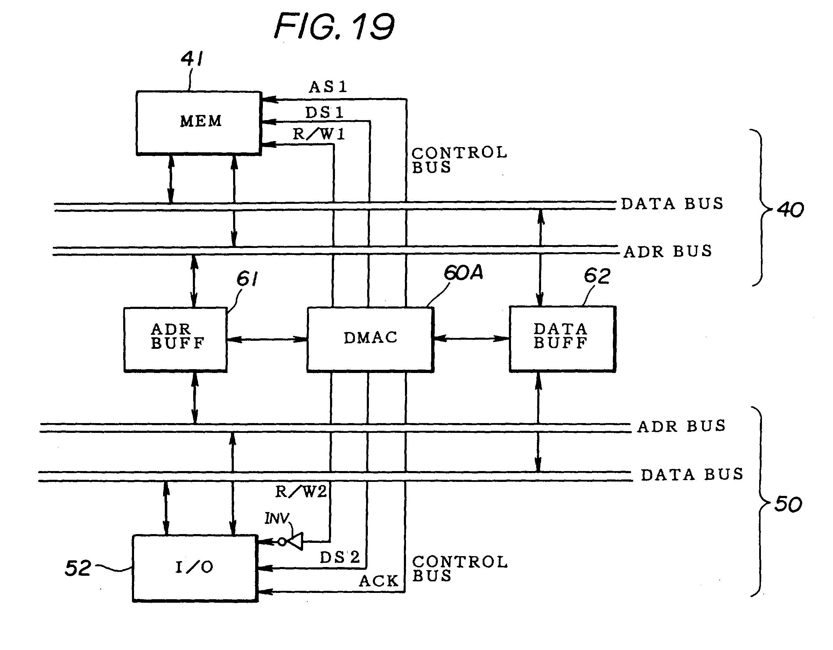

Next, a description will be given of an operation of the data processing apparatus when making a single transfer between the two system buses 40 and 50. For convenience' sake, it is assumed that a single transfer is made between the system buses 40 and 50 from the memory device 41 to the I/O interface 52. FIG.19 shows an essential part of the data processing apparatus for explaining this single transfer. In FIG.19, when the DMAC 60A receives a transfer request from the I/O interface 52, the DMAC 60A outputs the transfer address ADR on the address bus of the system bus 40 and also supplies this transfer address ADR to the memory device 41 through the address buffer 61. In addition, the DMAC 60A supplies the address strobe signal AS1, the data strobe signal DS1 and the read/write signal R/W1 which instructs a read operation to the memory device 41 through the control bus of the system bus 40. At the same time, the DMAC 60A supplies the acknowledge signal ACK to the I/O interface 52 through the control bus of the system bus 50. Furthermore, the DMAC 60A supplies the data strobe signal DS2 and the read/write signal R/W2 which instructs a read operation to the I/O interface 52 through the control bus of the system bus 50. Accordingly, the data from the memory device 41 is transferred to the I/O interface 52 through the data bus of the system bus 40, the data buffer 62 and the data bus of the system bus 50.

When transferring the transfer address ADR, the address buffer 61 is turned ON by the DMAC 60A and the transfer direction is switched over to the system bus 40 from the system bus 50. Similarly, the data buffer 62 is turned ON by the DMAC 60A when transferring the data and the transfer direction is switched over to the system bus 50 from the system bus 40.

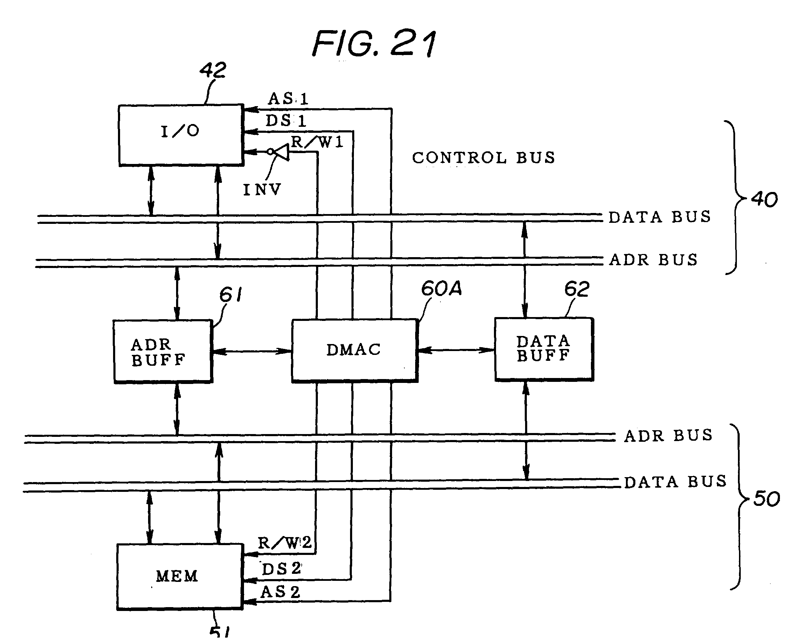

FIGS.20(A) through 20(L) are timing charts for explaining the operation of the block system shown in FIG.19 and FIG.21 which will be described later when making the single transfer between the two system buses. A case V shows the timings of the various signals for the above described case. In FIGS.20(A) through 20(L), the same signal designations are used as in FIGS.16(A) through 16(L). A case VII shows the timings of the various signals when the I/O interface 52 outputs the ready signal IOREADY with respect to the DMAC 60A. In this case VII, the DMAC 60A ends the transfer by simultaneously monitoring the ready signal IOREADY from the I/O interface 52 and the data complete signal DC1 from the memory device 41.

Next, a description will be given of an operation of the data processing apparatus when making a single transfer from the I/O interface 42 to the memory device 51 between the two system buses 40 and 50. FIG.21 shows an essential part of the data processing apparatus for explaining this single transfer. In FIG.21, when the DMAC 60A receives a transfer request from the I/O interface 42, the DMAC 60A outputs the data strobe signal DS1 and the read/write signal R/W1 which instructs a write operation to the I/O interface 42 through the control bus of the system bus 40. At the same time, the DMAC 60A supplies the transfer address ADR to the memory device 51 through the address bus of the system bus 50 and the address buffer 61. In addition, the DMAC 60A outputs the address strobe signal AS2, the data strobe signal DS2 and the read/write signal R/W2 which instructs a write operation to the memory device 51 on the control bus of the system bus 50. Further, the DMAC 60A supplies the acknowledge signal ACK to the I/O interface 42 through the control bus of the system bus 40. Hence, the data from the I/O interface 42 is transferred by the single transfer to the memory device 51 through the data bus of the system bus 40, the data buffer 62 and the data bus of the system bus 50.

In this case, when the buffers 61 and 62 are turned ON, the transfer directions thereof are both changed to the system bus 40 from the system bus 50 by the control of the DMAC 60A. A case VI shows the timings of the various signals in this case.

A case VIII shows the timings of the various signals when the I/O interface 42 outputs the ready signal IOREADY with respect to the DMAC 60A. In this case VIII, the DMAC 60 makes the data strobe signal DS2 intended for the memory device 51 active when the ready signal IOREADY is received from the I/O interface 42 and ends the transfer by monitoring the data complete signal DC2 from the memory device 51.

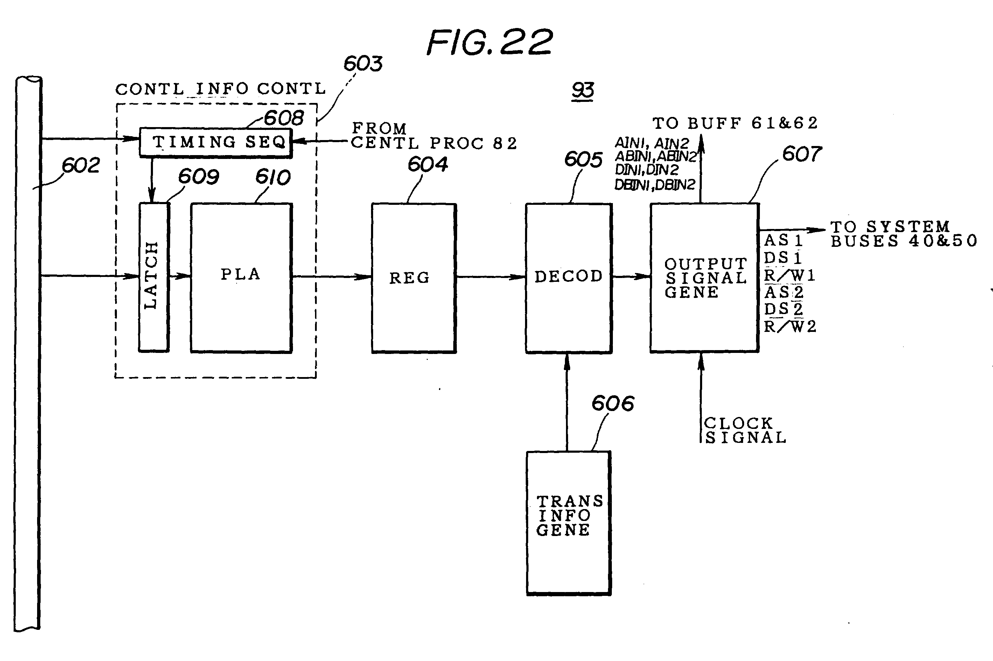

Next, a description will be given of an embodiment of a terminal control part of the DMAC 60A which generates and outputs the various control signals described above, by referring to FIG.22. The terminal control part generally has a control information controller 603, a register 604, a decoder 605, a transfer information generator 606, and an output signal generator 607. The control information controller 603 is made up of a timing sequencer 608 which is used for information setting and receives a control signal from the central processor 82 of the DMAC 60A, a latch circuit 609 which is coupled to an internal data bus 602 of the DMAC 60A, and a programmable logic array (PLA) 610 for generating transfer information.

The timing sequencer 608 controls the latch timing of the latch circuit 609 based on the control signal from the central processor 82. The PLA 610 generates information related to the various control signals which are used for the single transfer based on the transfer information obtained from the internal data bus 602 through the latch circuit 609, and stores this information in the register 604. The transfer information from the internal data bus 602 includes information on whether or not the source is the memory device 41 coupled to the system bus 40, whether or not the transfer is a single transfer and the like. Accordingly, the information outputted from the PLA 610 includes information on whether or not to make the address strobe signal AS1 active and the like. On the other hand, the transfer information generator 604 generates other transfer information and supplies these other transfer information to the decoder 605. Hence, the decoder 605 outputs information on the various control signals which are dependent on the transfer modes based on the information obtained from the transfer information generator 606. The output signal generator 607 generates the signals AS1, DS1, R/W1, AS2, DS2, R/W2 and ACK and the control signals for controlling the buffers 61 and 62 based on the information from the decoder 605.

According to this embodiment, the control signals outputted on the system bus 50 are not generated by use of the control signals which are outputted on the system bus 40 from the DMAC 60A, and the DMAC 60A generates the control signals exclusively for the two system buses 40 and 50. For this reason, there is no need to control the devices coupled to the system buses 40 and 50 by a complex control circuit especially when making a single transfer between the two system buses 40 and 50.

In addition, the DMAC 60A outputs the data strobe signals DS1 and DS2 on the corresponding system buses 40 and 50 when making the single transfer between the two system buses 40 and 50. When making the single transfer on the same system bus, the data strobe signal to the I/O interface is for example generated based on the read/write signal and the acknowledge signal from the DMAC 60A, as described before. However, as may be seen from FIGS.20(A) through 20(L), the same data strobe signal from the DMAC 60A is used as the data strobe signals DS1 and DS2 in the cases V and VI. Thus, it is possible to simplify the circuit construction of a circuit which generates the data strobe signal when making the single transfer between the two system buses 40 and 50.

Furthermore, as may be seen from FIGS.20(A) through 20(L), the same read/write signal from the DMAC 60A is used as the read/write signals R/W1 and R/W2 in the cases V through VIII. As a result, it is possible to simplify the circuit construction of a circuit which generates the read/write signal when making the single transfer between the two system buses 40 and 50. In addition, the read/write signal with respect to the memory device is inverted and supplied to the I/O interface when making the single transfer on the same system bus, and there is no need to provide a special circuit such as a selector for controlling the I/O interface.

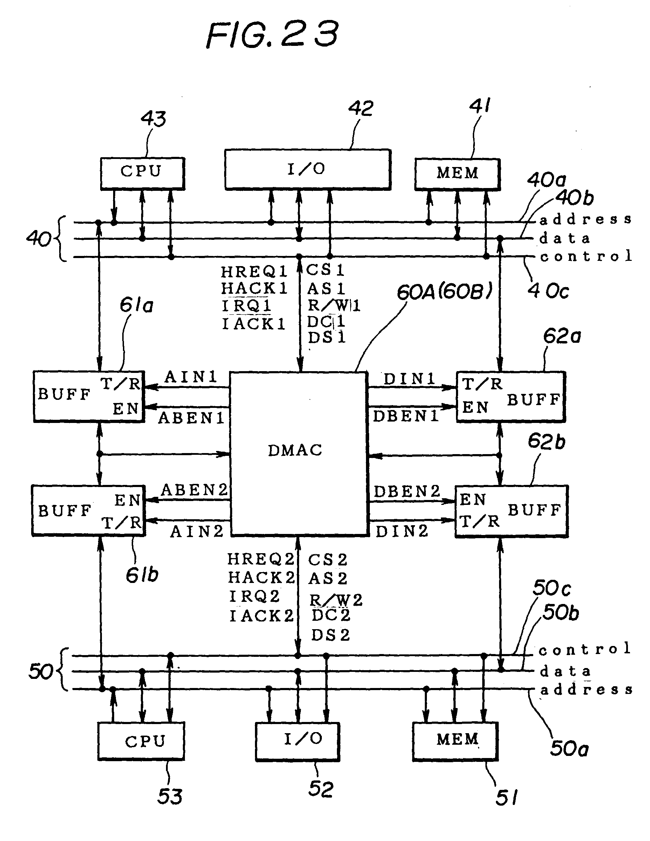

Next, a description will be given of another data processing apparatus applied with the first embodiment of the DMAC according to the present invention. FIG.23 shows an essential part of a data processing apparatus applied with the first embodiment of the DMAC according to the present invention. In FIG.23, those parts which are basically the same as those corresponding parts in FIG.14 are designated by the same reference numerals. The system bus 40 is made up of an address bus 40a, a data bus 40b and a control bus 40c. The memory device 41, the I/O interface 42 and a CPU 43 which is used as a bus master are coupled to the system bus 40. Similarly, the system bus 50 is made up of an address bus 50a, a data bus 50b and a control bus 50c, and the memory 51, the I/O interface 52 and a CPU 53 which is used as a bus master are coupled to the system bus 50.

The DMAC 60A is coupled directly to the control buses 40c and 50c. In addition, the DMAC 60A is coupled to the address buses 40a and 40b through bidirectional address buffers 61a and 61b, and is coupled to the data buses 40b and 50b through bidirectional data buffers 62a and 62b. The address buffers 61a and 61b correspond to the address buffer 61 shown in FIG.14, and the data buffers 62a and 62b correspond to the data buffer 62.

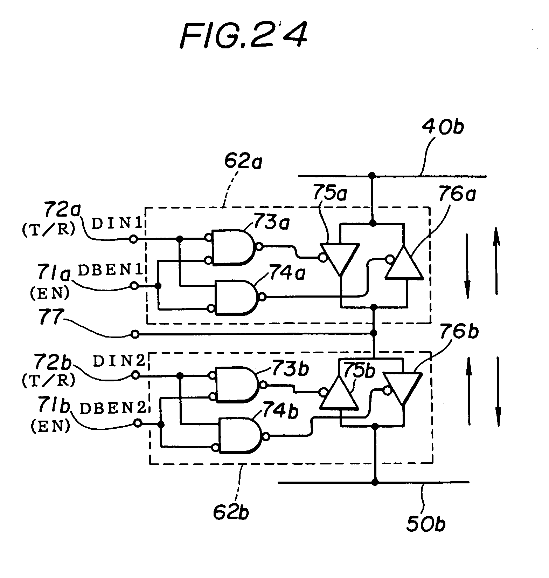

The data buffers 62a and 62b may have a construction shown in FIG.24. The data buffer 62a has gate circuits 73a and 74a and tristate buffers 75a and 76a which are connected as shown. The data buffer 62b has gate circuits 73b and 74b and tristate buffers 75b and 76b which are connected as shown. Control signals DBEN1 and DBEN2 from the DMAC 60A for controlling the ON/OFF states of the data buffers 62a and 62b are respectively applied to terminals 71a and 71b (EN). The control signal DBEN1 is supplied to the gate circuits 73a and 74a of the data buffer 62a, and the control signal DBEN2 is supplied to the gate circuits 73b and 74b of the data buffer 62b. Control signals DIN1 and DIN2 from the DMAC 60A for controlling the transfer direction are respectively applied to terminals 72a and 72b (T/R). The control signal DIN1 is supplied to the gate circuits 73a and 74a of the data buffer 62a, and the control signal DIN2 is supplied to the gate circuits 73b and 74b of the data buffer 62b.

The tristate buffer 75a is conductive when the control signals DIN1 and DBEN1 both have a low level and the tristate buffer 76a is conductive when the control signal DIN1 has a high level and the control signal DBEN1 has a low level, so as to couple the data bus 40b and an input/output terminal 77 of the DMAC 60A. The tristate buffers 75b and 76b similarly couple the data bus 50b and the input/output terminal 77. Hence, when both the tristate buffers 76a and 76b are conductive, for example, it is possible to couple the data buses 40b and 50b.

The address buffers 61a and 61b have constructions identical to those of the data buffers 62a and 62b, and a description thereof will be omitted. The address buffer 61a receives a control signal ABEN1 which controls the ON/OFF state and a control signal AIN1 which controls the transfer direction at respective terminals EN and T/R, while the address buffer 61b receives a control signal ABEN2 which controls the ON/OFF state and a control signal AIN2 which controls the transfer direction at respective terminals EN and T/R.

Next, a description will be given of a second embodiment of the DMAC according to the present invention applied to data processing apparatuses employing first through third systems.

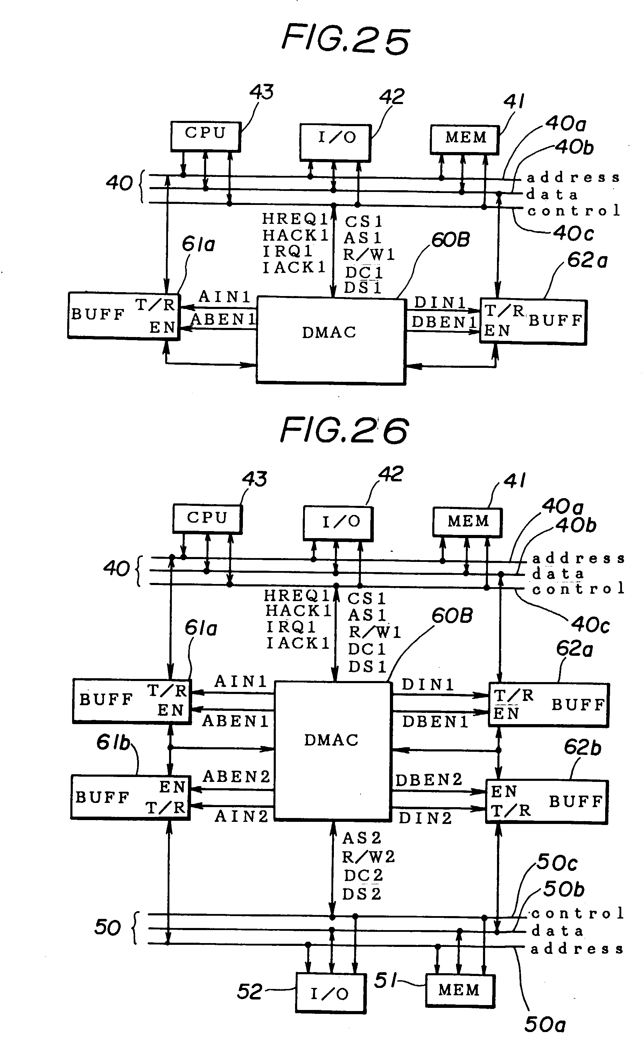

According to the first system, a DMAC 60B is coupled to the system bus 40 to which the CPU 43 is coupled as shown in FIG.25. In FIG.25, those parts which are the same as those corresponding parts in FIG.15 are designated by the same reference numerals, and a description thereof will be omitted. The DMAC 60B is in a local mode when applied to this first system. In FIG.25, the DMAC 60B controls the DMA transfer on the system bus 40, and the buffers 61a and 62a are used as bus drivers.

According to the second system, the DMAC 60B is also coupled to the system bus 50 to which no CPU is coupled to the system bus 50 as shown in FIG.26. In FIG.26, those parts which are the same as those corresponding parts in FIG.25 are designated by the same reference numerals, and a description thereof will be omitted. The DMAC 60B is in a remote mode when applied to this second system. In FIG.26, the DMAC 60B constantly has exclusive right to the system bus 50. The buffers 61a and 62a are used as bus isolators and the buffers 61b and 62b are used as bus drivers.

According to the third system, the DMAC 60B is coupled to the system bus 40 to which the CPU 43 is coupled and also to the system bus 50 to which the CPU 53 is coupled as shown in FIG.23 described before. Since the system block diagram in this case is identical to that shown in FIG.23, the second embodiment of the DMAC 60B is simply indicated in brackets in FIG.23. The DMAC 60B is in a subchannel mode when applied to this third system.

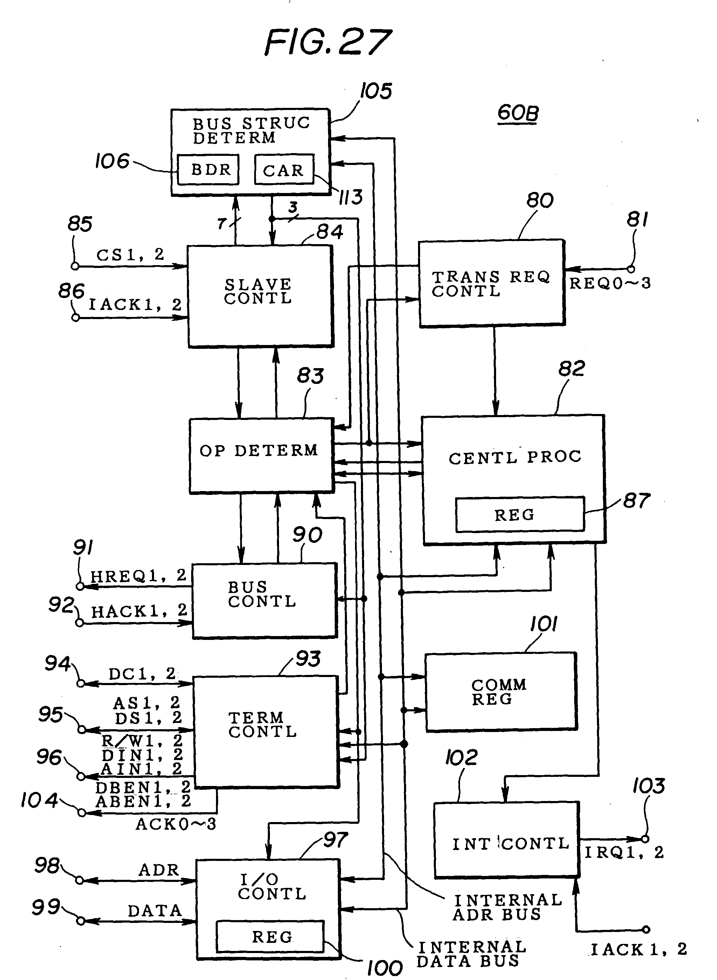

FIG.27 shows the second embodiment of the DMAC according to the present invention. In FIG.27, those parts which are basically the same as those corresponding parts in FIG.5 are designated by the same reference numerals, and a description thereof will be omitted. The DMAC 60B has in addition to elements of the DMAC 60A shown in FIG.5 a bus structure determination part 105.

The bus structure determination part 105 is coupled to the internal address bus and the internal data bus. For example, when the power source of the system is turned ON, the CPU 43 makes a write access to the bus structure determination part 105 and sets a bus definition data which defines the bus structure (that is, the system) in a bus definition register (BDR) 106 within the bus structure determination part 105 and sets a channel bus attribute data which defines which channel is controlled by which CPU in a channel bus attribute register (CAR) 143 within the bus structure determination part 105. The above described setting of the data in the registers 106 and 143 is made by supplying the chip select signal CS1 from the CPU 43 to the slave controller 84 and supplying a write request from the slave controller 84 to the bus structure determination part 105. The bus structure determination part 105 generates mode signals from the data stored therein, and these mode signals indicate the first, second and third systems. That is, the mode signals indicate the local, remote and subchannel modes of the DMAC 60B. In addition, the bus structure determination part 105 generates a channel bus attribute signal which indicates the CPU (43 or 53) controlling each channel for each of the four channels which make the data transfer. The mode signals and the channel bus attribute signals from the bus structure determination part 105 are supplied to the central processor 82, the operation determination part 83, the bus controller 90 and the terminal controller 93.

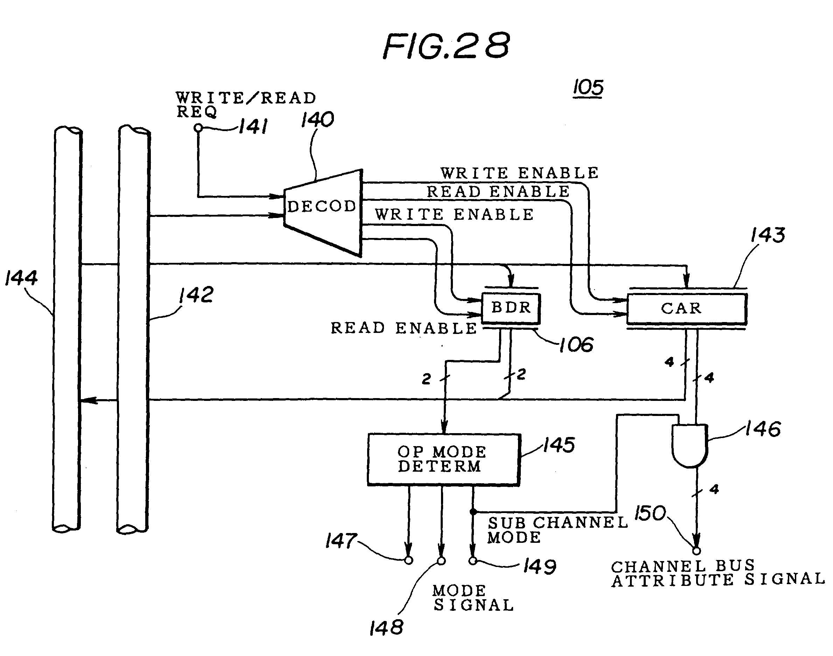

FIG.28 shows an embodiment of the bus structure determination part 105. In FIG.28, a decoder 140 decodes an address supplied from an internal address bus 142 when a write/read request from the slave controller 84 is obtained through a terminal 141 and generates a write enable signal and a read enable signal for the registers 106 and 143.

The bus definition register 106 stores a 2-bit bus definition data which is obtained for example from the CPU 43 through an internal data bus 144 when the write enable signal is received by the bus definition register 106. The bus definition register 106 constantly supplies the stored data to an operation mode determination circuit 145, and supplies the stored data to the internal data bus 144 when the read enable signal is received from the decoder 140.

The channel bus attribute register 143 stores a 4-bit channel bus attribute data which is obtained for example from the CPU 43 through the internal data bus 144 when the write enable signal is received by the channel bus attribute register 143. The channel bus attribute data indicates the CPU (43 or 53) which controls each channel for each of the four channels which independently make the data transfer within the DMAC 60B. One bit of the channel bus attribute data corresponds to one channel, and each bit corresponds to the CPU 43 when the bit value is "0" and to the CPU 53 when the bit value is "1". The channel bus attribute data is set in the channel bus attribute register 143 approximately at the same time as the setting of the bus definition data in the bus definition register 106. The channel bus attribute register 143 constantly supplies the stored data to an AND circuit 146, and supplies the stored data to the internal data bus 144 when the read enable signal is received from the decoder 140.

The operation mode determination circuit 145 decodes the data from the bus definition data from the bus definition register 106 and generates mode signals which indicate the local, remote and subchannel modes. The mode signals indicating the local, remote and subchannel modes are respectively outputted from terminals 147, 148 and 149. In addition, the mode signal which indicates the subchannel mode when the value "1" is outputted from the terminal 149 is supplied to the AND circuit 146.

The AND circuit 146 is designed to output a 4-bit output signal, and outputs the 4-bit data from the channel bus attribute register 113 through a terminal 150 as the channel bus attribute signal only in the subchannel mode. In the local and remote modes, all of the four bits of the channel bus attribute signal become "0" which indicates that all of the channels are controlled by the CPU 43.

Next, a description will be given of a slave operation in which the CPU 43, for example, makes access to the registers 106 and 143 of the DMAC 60B, by referring to FIGS.8(A) through 8(S) described before in conjunction with the second embodiment.

The clock signal CLK shown in FIG.8(A) is supplied to the DMAC 60B. During the read operation, the DMAC 60B enters the slave mode when the low-level chip select signal CS1 shown in FIG.8(J) is received from the CPU 43 and sets the control signals ABEN1 and AIN1 respectively shown in FIGS.8(B) and 8(C) to the low levels in the cycle T_{S1} to enter the address shown in FIG.8(F) from the CPU 43. In addition, the DMAC 60B sets the control signal DBEN1 shown in FIG.8(D) to the low level and the control signal DIN1 shown in FIG.8(E) to the high level in the cycle T_{S4} responsive to the high-level read/write signal R/W1 shown in FIG.8(G). Accordingly, the data shown in FIG.8(H) read out from the bus definition register 106 is outputted from the DMAC 60B and the DMAC 60B outputs the data complete signal DC1 shown in FIG.8(I).

During the write operation, the DMAC 60B sets the control signals DBEN1 and DIN1 respectively shown in FIGS.8(M) and 8(N) to the low levels responsive to the the low-level read/write signal R/W1 shown in FIG.8(P). The data received from the CPU 43 is written at the address in the register 87 or the communication register 101 supplied from the CPU 43. The data from the CPU 43 for defining the bus structure is written in the bus definition register 106 of the bus structure definition part 105. FIGS.8(K) and 8(L) respectively show the control signals ABEN1 and AIN1, and FIG.8(O) shows the address. FIGS.8(Q), 8(R) and 8(S) respectively show the data, the data complete signal DC1 and the chip select signal CS1.

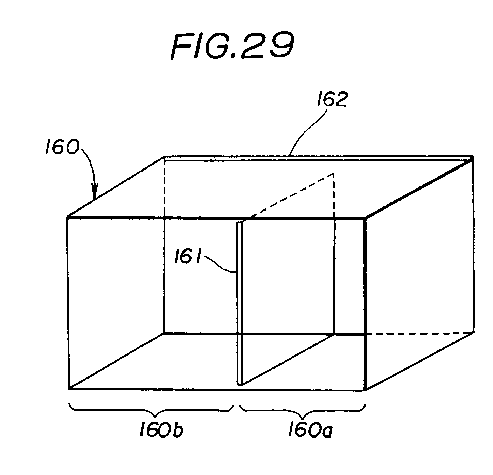

FIG.29 shows an embodiment of a system rack which holds the DMAC shown in FIG.27. In a system rack 160 shown in FIG.29, the DMAC 60B is provided on a board 161 and a board (not shown) provided with the memory device 41, the I/O interface 42 and the CPU 43 is inserted in a space 160a which is to the right of the board 161. The board 161 and the board (not shown) are connected to a board 161 by a back plane 162. In other words, the data processing apparatus employing the first system is constituted solely within the space 160a.

When extending the data processing apparatus employing the first system into a data processing apparatus employing the second system, a board (not shown) provided with the memory device 51 and the I/O interface 52 is inserted in a space 160b which is to the left of the board 161.

When further extending the data processing apparatus employing the second system into a data processing apparatus employing the third system, a board (not shown) provided with the CPU 53 is further inserted in the space 160b.

When extending the system of the data processing apparatus from the first system to the second system, it is only necessary to add one board and change the bus definition data which is set in the DMAC 60B by the CPU 43. When extending the system of the data processing apparatus from the first or second system to the third system, it is only necessary to add one or two boards and change the bus definition data and the channel bus attribute data. Therefore, there is no need to change the board 161 which is provided with the DMAC 60B when extending the system of the data processing apparatus and the facility of extending the system of the data processing apparatus is improved.

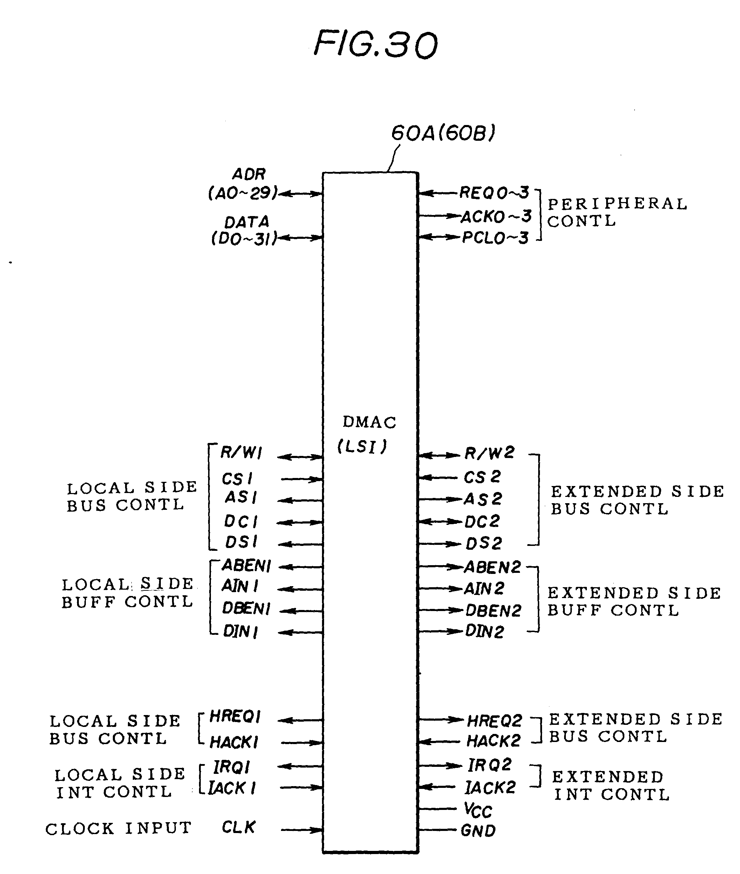

FIG.30 shows the DMAC 60A (or 60B) according to the present invention produced in a form of a large scale integrated (LSI) circuit. The DMAC 60A includes address input/output terminals A0 through A29, data input/output terminals D0 through D31, local side bus control terminals R/W1, CS1, AS1, DC1 and DS1, local side buffer control terminals ABEN1, AIN1, DBEN1 and DIN1, local side bus control terminals HREQ1 and HACK1, local side interrupt control terminals IRQ1 and IACK1, a clock input terminal CLK, extended side bus control terminals R/W2, CS2, AS2, DC2 and DS2, extended side buffer control terminals ABDN2, AIN2, DBEN2 and DIN2, extended side bus control terminals HREQ2 and HACK2, extended interrupt control terminals IRQ2 and IACK2, power source voltage terminals Vcc and GND, and peripheral control terminals REQ0 through REQ3, ACK0 through ACK3 and PCL0 through PCL3.

When the DMAC 60A is a bus master, the address input/output terminals A0 through A29 output an address of an external device to which an access is to be made. On the other hand, when the DMAC 60A is a bus slave, the address input/output terminals A0 through A29 input an address for selecting an internal register. All of the address input/output terminals A0 through A29 have high impedances in an idle state.

The data input/output terminals D0 through D31 are used for the data transfer between the DMAC 60A and a CPU when the DMAC 60A is a bus slave and are used for the data transfer between the DMAC 60A and the external device when the DMAC 60A is a bus master.

The terminals AS1 and AS2 respectively output the address strobe signals AS1 and AS2 when the DMAC 60A is a bus master to indicate that the address outputted from the DMAC 60A is valid. The terminals DS1 and DS2 respectively output the data strobe signals DS1 and DS2 to assert when the DMAC 60A is a bus master and indicate that the data outputted from the DMAC 60A is valid during the write operation and indicate that the external device may output data during the read operation. The input/output terminals R/W1 and R/W2 are used for controlling the direction of the data transfer on the data bus. When the DMAC 60A is a bus master, the read/write signals R/W1 and R/W2 with respect to the external device are outputted from the input/output terminals R/W1 and R/W2, where a low level indicates a write operation to the external device and a high level indicates a read operation from the external device. When the DMAC 60A is a bus slave, the read/write signals R/W1 and R/W2 from the CPU is inputted from the input/output terminals R/W1 and R/W2 and supplied to the register of the DMAC 60A, where a low level indicates a write operation to the register and a high level indicates a read operation from the register.

The input/output terminals DC1 and DC2 respectively input and output the data complete signals DC1 and DC2 to indicate that the data on the data bus is valid or to indicate that the data write operation is completed. The input/output terminals DC1 and DC2 respectively output the data complete signals DC1 and DC2 when the DMAC 60A is a bus slave to indicate that the data is written into the register of the DMAC 60A or to indicate that the content of the register is outputted on the data bus. When the DMAC 60A is a bus master, the input/output terminals DC1 and DC2 respectively input the data complete signals DC1 and DC2 to indicate that the data of the external device is valid or to indicate that the data write operation to the external device is completed. The input terminals CS1 and CS2 respectively input the chip select signals CS1 and CS2 to read and write the data from and to the internal register of the DMAC 60A.

The output terminals ABEN1 and ABEN2 respectively output the address bus enable signals ABEN1 and ABEN2. When the DMAC 60A is a bus master or a bus slave, the output terminals ABEN1 and ABEN2 respectively output the address bus enable signals ABEN1 and ABEN2 to control the address buffers provided between the DMAC 60A and the external address buses. The output terminals AIN1 and AIN2 respectively output the address in signals AIN1 and AIN2 to control the direction of the address transfer of the address buffers provided between the DMAC 60A and the external address buses. The address in signals AIN1 and AIN2 respectively have a low level when inputting the addresses from the external address buses to the DMAC 60A. The output terminals DBEN1 and DBEN2 respectively output the data bus enable signals DBEN1 and DBEN2 when the DMAC 60A is a bus master or a bus slave to control the data buffers provided between the DMAC 60A and the external data buses. The output terminals DIN1 and DIN2 respectively output the data in signals DIN1 and DIN2 to control the direction of data transfer of the data buffers provided between the DMAC 60A and the external data buses. The data in signals DIN1 and DIN2 respectively have a low level when the data is to be inputted to the DMAC 60A from the external data bus.

The output terminals HREQ1 and HREQ2 respectively output the hold requests HREQ1 and HREQ2 to indicate that the DMAC 60A is requesting the right to use the external system bus. The input terminals HACK1 and HACK2 respectively input the hold acknowledge signals HACK1 and HACK2 and the DMAC 60A is informed when the DMAC 60A has obtained the right to use the external system bus. The output terminals IRQ1 and IRQ2 respectively output the interrupt request signals IRQ1 and IRQ2 to request the interrupt process. The input terminals IACK1 and IACK2 respectively input the interrupt acknowledge signals IACK1 and IACK2 to receive the interrupt acknowledge response from the CPU. When the interrupt acknowledge signals IACK1 and IACK2 are asserted, the interrupt acknowledge cycle is executed and the interrupt vector is outputted.

The input terminals REQ0 through REQ3 respectively input the data transfer request signals REQ0 through REQ3 from the input/output interface. The output terminals ACK0 through ACK3 respectively output the data transfer acknowledge signals ACK0 through ACK3 to assert the DMA transfer cycle and inform the input/output interface that the transfer will be executed.

The clock input terminal CLK inputs the operation clock signal CLK of the DMAC 60A. The operation clock signal CLK is generated in a clock generator (not shown). The power source voltage terminal Vcc receives a power source voltage of +5 V and the power source voltage terminal GND is grounded, for example.

Further, the present invention is not limited to these embodiments, but various variations and modifications may be made without departing from the scope of the present invention.

## Claims

1. A direct memory access controller adapted to control a direct memory access in a data processing apparatus which includes at least first and second system buses (40, 50) which are mutually independent, first and second memory devices (41, 51) respectively coupled to the first and second system buses, first and second input/output interfaces (42, 52) respectively coupled to the first and second system buses, at least one central processing unit (43, 53) coupled to one of the first and second system buses, and buffer means (61, 62) for controlling data and address transfer and direction of the data and address transfer between the first and second system buses, characterized in that said direct memory access controller comprises:
bus structure determination means (105) including register means (106, 113) for storing at least a bus definition data which is received from the central processing unit (43, 53) and defines a system structure of the data processing apparatus.

2. The direct memory access controller as claimed in claim 1, characterized in that there are further provided:
bus and terminal controller means (90, 93), coupled to the first and second system buses (40, 50), for obtaining a right to use the first and second system buses responsive to a transfer request;
interrupt and slave controller means (102, 84), coupled to the first and second system buses, for controlling an interrupt to the central processing unit (43, 53) and for controlling an access from the central processing unit; and
operation determination means (83) for determining an operation of the direct memory access controller depending on the transfer request, whether or not said bus and terminal controller means obtained the right to use the first and second system buses and whether or not the access is made from the central processing unit,
said operation determination means controlling said bus and terminal controller means, said buffer means (61, 62) and said interrupt and slave controller means based on the operation determined thereby so as to make a direct memory access transfer responsive to said transfer request,
said bus definition data being supplied to said bus and terminal controller means, said interrupt and slave controller means and said operation determination means so as to determine operations thereof depending on said bus definition data.

3. The direct memory access controller as claimed in claim 2, characterized in that there are further provided:
transfer request controller means (80) for receiving a plurality of transfer requests and for selecting one of the transfer requests having a highest priority as said transfer request;
central processor means (82) for at least controlling transfer information responsive to said transfer request selected by said transfer request controller means; and
input/output controller means (97), coupled to the first and second system buses (40, 50), for controlling input and output of the address and the data responsive to the operation determined by said operation determination means (83),
said bus definition data being also supplied to said central processor means (82) so as to determine an operation thereof depending on said bus definition data.

4. The direct memory access controller as claimed claim 1, characterized in that said register means (106, 113) includes first register means (106) for storing the bus definition data, and second register means (113) for storing a channel bus attribute data which is received from the central processing unit (43, 53) and defines which system bus is controlled by the central processing unit.

5. The direct memory access controller as claimed in claim 4, characterized in that there are further provided:
bus and terminal controller means (90, 93), coupled to the first and second system buses (40, 50), for obtaining a right to use the first and second system buses responsive to a transfer request;
interrupt and slave controller means (102, 84), coupled to the first and second system buses, for controlling an interrupt to the central processing unit (43, 53) and for controlling an access from the central processing unit; and
operation determination means (83) for determining an operation of the direct memory access controller depending on the transfer request, whether or not said bus and terminal controller means obtained the right to use the first and second system buses and whether or not the access is made from the central processing unit,
said operation determination means controlling said bus and terminal controller means, said buffer means (61, 62) and said interrupt and slave controller means based on the operation determined thereby so as to make a direct memory access transfer responsive to said transfer request,
said bus definition data and said channel bus attribute data being supplied to said bus and terminal controller means, said interrupt and slave controller means and said operation determination means so as to determine operations thereof depending on said bus definition data and said channel bus attribute data.

6. The direct memory access controller as claimed in claim 5, characterized in that there are further provided:
transfer request controller means (80) for receiving a plurality of transfer requests and for selecting one of the transfer requests having a highest priority as said transfer request;
central processor means (82) for at least controlling transfer information responsive to said transfer request selected by said transfer request controller means; and
input/output controller means (97), coupled to the first and second system buses (40, 50), for controlling input and output of the address and the data responsive to the operation determined by said operation determination means (83),
said bus definition data and said channel bus attribute data being also supplied to said central processor means (82) so as to determine an operation thereof depending on said bus definition data and said channel bus attribute data.

7. The direct memory access controller as claimed in claim 1, characterized in that first and second central processing units (43, 53) are provided, and there are further provided:
bus and terminal controller means (90, 93), coupled to the first and second system buses (40, 50), for obtaining a right to use the first and second system buses responsive to a transfer request;
interrupt and slave controller means (102, 84), coupled to the first and second system buses, for controlling an interrupt to one of the first and second central processing units (43, 53) and for controlling an access from said one of the first and second central processing units; and
operation determination means (83) for determining an operation of the direct memory access controller depending on the transfer request, whether or not said bus and terminal controller means obtained the right to use the first and second system buses and whether or not the access is made from said one of the first and second central processing units,
said operation determination means controlling said bus and terminal controller means, said buffer means (61, 62) and said interrupt and slave controller means based on the operation determined thereby so as to make a direct memory access transfer responsive to said transfer request,
said bus definition data being supplied to said bus and terminal controller means, said interrupt and slave controller means and said operation determination means so as to determine operations thereof depending on said bus definition data.

8. The direct memory access controller as claimed in claim 7, characterized in that there are further provided:
transfer request controller means (80) for receiving a plurality of transfer requests and for selecting one of the transfer requests having a highest priority as said transfer request;
central processor means (82) for at least controlling transfer information responsive to said transfer request selected by said transfer request controller means; and
input/output controller means (97), coupled to the first and second system buses (40, 50), for controlling input and output of the address and the data responsive to the operation determined by said operation determination means (83),
said bus definition data being also supplied to said central processor means (82) so as to determine an operation thereof depending on said bus definition data.

9. The direct memory access controller as claimed claim 1, characterized in that said register means (106, 113) includes first register means (106) for storing the bus definition data, and second register means (113) for storing a channel bus attribute data which is received from an arbitrary one of the first and second central processing units (43, 53) and defines which system bus is controlled by the central processing unit.

10. The direct memory access controller as claimed in claim 9, characterized in that there are further provided:
bus and terminal controller means (90, 93), coupled to the first and second system buses (40, 50), for obtaining a right to use the first and second system buses responsive to a transfer request;
interrupt and slave controller means (102, 84), coupled to the first and second system buses, for controlling an interrupt to one of the first and second central processing units (43, 53) and for controlling an access from said one of the first and second central processing units; and
operation determination means (83) for determining an operation of the direct memory access controller depending on the transfer request, whether or not said bus and terminal controller means obtained the right to use the first and second system buses and whether or not the access is made from said one of the first and second central processing units,
said operation determination means controlling said bus and terminal controller means, said buffer means (61, 62) and said interrupt and slave controller means based on the operation determined thereby so as to make a direct memory access transfer responsive to said transfer request,
said bus definition data and said channel bus attribute data being supplied to said bus and terminal controller means, said interrupt and slave controller means and said operation determination means so as to determine operations thereof depending on said bus definition data and said channel bus attribute data.

11. The direct memory access controller as claimed in claim 10, characterized in that there are further provided:
transfer request controller means (80) for receiving a plurality of transfer requests and for selecting one of the transfer requests having a highest priority as said transfer request;
central processor means (82) for at least controlling transfer information responsive to said transfer request selected by said transfer request controller means; and
input/output controller means (97), coupled to the first and second system buses (40, 50), for controlling input and output of the address and the data responsive to the operation determined by said operation determination means (83),
said bus definition data and said channel bus attribute data being also supplied to said central processor means (82) so as to determine an operation thereof depending on said bus definition data and said channel bus attribute data.

12. The direct memory access controller as claimed in any of claims 7 to 11, characterized in that there are further provided:
communication register means (101), coupled to said operation determination means (83), for storing messages from the first and second central processing units (43, 53):
control means (84, 101), coupled to said communication register means, for enabling one of the first and second central processing units to make access to said communication register means depending on transfer requests from the first and second central processing units; and
interrupt controller means (102), coupled to said communication register means and the first and second system buses (40, 50), for informing one of the first and second central processing units which becomes a destination when the messages are stored in said communication register means,
a message communication between the first and second central processing units being made through said communication register means.

13. The direct memory access controller as claimed in claim 12, characterized in that said interrupt controller means (102) is a part of said interrupt and slave controller means (102, 84).

14. The direct memory access controller as claimed in claim 12, characterized in that there are further provided bus structure determination means (105) including first and second register means (106, 113) for respectively storing a bus definition data which is received from an arbitrary one of the first and second central processing units (43, 53) and defines a system structure of the data processing apparatus and a channel bus attribute data which is received from said arbitrary one of the first and second central processing units and defines which system bus is controlled by the central processing unit, said bus definition data and said channel bus attribute data being supplied to said bus and terminal controller means (90, 93), said interrupt and slave controller means (102, 84), said operation determination means (83) and said central processor means (82) so as to determine operations thereof depending on said bus definition data and said channel bus attribute data.

15. The direct memory access controller as claimed in claim 10, characterized in that there are further provided communication register means (101) coupled to said operation determination means (83) for storing messages from the first and second central processing units (43, 53), control means (84, 101) coupled to said communication register means for enabling one of the first and second central processing units to make access to said communication register means depending on transfer requests from the first and second central processing units, and interrupt controller means (102) coupled to said communication register means and the first and second system buses (40, 50) for informing one of the first and second central processing units which becomes a destination when the messages are stored in said communication register means, a message communication between the first and second central processing units being made through said communication register means.

16. The direct memory access controller as claimed in claim 12, characterized in that there are further provided communication register means (101) coupled to said operation determination means (83) for storing messages from the first and second central processing units (43, 53), control means (84, 101) coupled to said communication register means for enabling one of the first and second central processing units to make access to said communication register means depending on transfer requests from the first and second central processing units, and interrupt controller means (102) coupled to said communication register means and the first and second system buses (40, 50) for informing one of the first and second central processing units which becomes a destination when the messages are stored in said communication register means, a message communication between the first and second central processing units being made through said communication register means.

17. The direct memory access controller as claimed in claim 15 or 16, characterized in that said interrupt controller means (102) is a part of said interrupt and slave controller means (102, 84).

## Patentansprüche

1. Ein Direktspeicherzugriffscontroller, der dafür ausgelegt ist, einen Direktspeicherzugriff in einer Datenverarbeitungsvorrichtung zu steuern, die wenigstens erste und zweite Systembusse (40, 50) enthält, die gegenseitig unabhängig sind, erste und zweite Speichervorrichtungen (41, 51), die jeweilig mit den ersten und zweiten Systembussen gekoppelt sind, erste und zweite Eingabe-/Ausgabeschnittstellen (42, 52), die jeweilig mit den ersten und zweiten Systembussen gekoppelt sind, wenigstens eine zentrale Verarbeitungseinheit (43, 53), die mit einem der ersten und zweiten Systembusse gekoppelt ist, und ein Puffermittel (61, 62) zum Steuern der Daten- und Adressenübertragung und der Richtung der Daten- und Adressenübertragung zwischen den ersten und zweiten Systembussen, dadurch gekennzeichnet, daß der genannte Direktspeicherzugriffscontroller umfaßt:
ein Busstrukturbestimmungsmittel (105), das ein Registermittel (106, 113) enthält, zum Speichern wenigstens von Busdefinitionsdaten, die von der zentralen Verarbeitungseinheit (43, 53) empfangen werden und eine Systemstruktur der Datenverarbeitungsvorrichtung definieren.

2. Der Direktspeicherzugriffscontroller nach Anspruch 1, dadurch gekennzeichnet, daß ferner vorgesehen sind:
ein Bus- und Anschlußcontrollermittel (90, 93), das mit den ersten und zweiten Systembussen (40, 50) gekoppelt ist, zum Erhalten eines Rechtes zum Benutzen der ersten und zweiten Systembusse als Reaktion auf eine Übertragungsanforderung;
ein Unterbrechungs- und Slavecontrollermittel (102, 84), das mit den ersten und zweiten Systembussen gekoppelt ist, zum Steuern einer Unterbrechung bei der zentralen Verarbeitungseinheit (43, 53) und zum Steuern eines Zugriffes von der zentralen Verarbeitungseinheit; und
ein Operationsbestimmungsmittel (83) zum Bestimmen einer Operation des Direktspeicherzugriffscontrollers in Abhängigkeit von der Übertragungsanforderung, davon, ob das genannte Bus- und Anschlußcontrollermittel das Recht zum Benutzen der ersten und zweiten Systembusse erhielt oder nicht, und ob der Zugriff von der zentralen Verarbeitungseinheit erfolgt oder nicht,
welches Operationsbestimmungsmittel das genannte Bus- und Anschlußcontrollermittel, das genannte Puffermittel (61, 62) und das genannte Unterbrechungs- und Slavecontrollermittel auf der Grundlage der dadurch bestimmten Operation steuert, um als Reaktion auf die genannte Übertragungsanforderung eine Direktspeicherzugriffsübertragung auszuführen,
welche Busdefinitionsdaten dem genannten Bus- und Anschlußcontrollermittel, dem genannten Unterbrechungs- und Slavecontrollermittel und dem genannten Operationsbestimmungsmittel zugeführt werden, um in Abhängigkeit von den genannten Busdefinitionsdaten Operationen von ihnen zu bestimmen.

3. Der Direktspeicherzugriffscontroller nach Anspruch 2, dadurch gekennzeichnet, daß ferner vorgesehen sind:
ein Übertragungsanforderungscontrollermittel (80) zum Empfangen einer Vielzahl von Übertragungsanforderungen und zum Selektieren einer der Übertragungsanforderungen, die eine höchste Priorität hat, als die genannte Übertragungsanforderung;
ein Zentralprozessormittel (82) wenigstens zum Steuern von Übertragungsinformationen als Reaktion auf die genannte Übertragungsanforderung, die durch das genannte Übertragungsanforderungscontrollermittel selektiert wurde; und
ein Eingabe-/Ausgabecontrollermittel (97), das mit den ersten und zweiten Systembussen (40, 50) gekoppelt ist, zum Steuern der Eingabe und Ausgabe der Adresse und der Daten als Reaktion auf die Operation, die durch das genannte Operationsbestimmungsmittel (83) bestimmt wurde,
welche Busdefinitionsdaten auch dem genannten Zentralprozessormittel (82) zugeführt werden, um in Abhängigkeit von den genannten Busdefinitionsdaten eine Operation von ihm zu bestimmen.

4. Der Direktspeicherzugriffscontroller nach Anspruch 1, dadurch gekennzeichnet, daß das genannte Registermittel (106, 113) ein erstes Registermittel (106) enthält, zum Speichern der Busdefinitionsdaten, und ein zweites Registermittel (113) zum Speichern von Kanalbusattributdaten, die von der zentralen Verarbeitungseinheit (43, 53) empfangen werden und definieren, welcher Systembus durch die zentrale Verarbeitungseinheit gesteuert wird.

5. Der Direktspeicherzugriffscontroller nach Anspruch 4, dadurch gekennzeichnet, daß ferner vorgesehen sind:
ein Bus- und Anschlußcontrollermittel (90, 93), das mit den ersten und zweiten Systembussen (40, 50) gekoppelt ist, zum Erhalten eines Rechtes zum Benutzen der ersten und zweiten Systembusse als Reaktion auf eine Übertragungsanforderung;
ein Unterbrechungs- und Slavecontrollermittel (102, 84), das mit den ersten und zweiten Systembussen gekoppelt ist, zum Steuern einer Unterbrechung bei der zentralen Verarbeitungseinheit (43, 53) und zum Steuern eines Zugriffes von der zentralen Verarbeitungseinheit; und
ein Operationsbestimmungsmittel (83) zum Bestimmen einer Operation des Direktspeicherzugriffscontrollers in Abhängigkeit von der Übertragungsanforderung, davon, ob das genannte Bus- und Anschlußcontrollermittel das Recht zum Benutzen der ersten und zweiten Systembusse erhielt oder nicht, und ob der Zugriff von der zentralen Verarbeitungseinheit erfolgt oder nicht,
welches Operationsbestimmungsmittel das genannte Bus- und Anschlußcontrollermittel, das genannte Puffermittel (61, 62) und das genannte Unterbrechungs- und Slavecontrollermittel auf der Grundlage der dadurch bestimmten Operation steuert, um als Reaktion auf die genannte Übertragungsanforderung eine Direktspeicherzugriffsübertragung auszuführen,
welche Busdefinitionsdaten und welche Kanalbusattributdaten dem genannten Bus- und Anschlußcontrollermittel, dem genannten Unterbrechungs- und Slavecontrollermittel und dem genannten Operationsbestimmungsmittel zugeführt werden, um in Abhängigkeit von den genannten Busdefinitionsdaten und den genannten Kanalbusattributdaten Operationen von ihnen zu bestimmen.

6. Der Direktspeicherzugriffscontroller nach Anspruch 5, dadurch gekennzeichnet, daß ferner vorgesehen sind:
ein Übertragungsanforderungscontrollermittel (80) zum Empfangen einer Vielzahl von Übertragungsanforderungen und zum Selektieren einer der Übertragungsanforderungen, die eine höchste Priorität hat, als die genannte Übertragungsanforderung;
ein Zentralprozessormittel (82) wenigstens zum Steuern von Übertragungsinformationen als Reaktion auf die genannte Übertragungsanforderung, die durch das genannte Übertragungsanforderungscontrollermittel selektiert wurde; und
ein Eingabe-/Ausgabecontrollermittel (97), das mit den ersten und zweiten Systembussen (40, 50) gekoppelt ist, zum Steuern der Eingabe und Ausgabe der Adresse und der Daten als Reaktion auf die Operation, die durch das genannte operationsbestimmungsmittel (83) bestimmt wurde,
welche Busdefinitionsdaten und welche Kanalbusattributdaten auch dem genannten Zentralprozessormittel (82) zugeführt werden, um in Abhängigkeit von den genannten Busdefinitionsdaten und den genannten Kanalbusattributdaten eine Operation von ihm zu bestimmen.

7. Der Direktspeicherzugriffscontroller nach Anspruch 1, dadurch gekennzeichnet, daß erste und zweite zentrale Verarbeitungseinheiten (43, 53) vorgesehen sind, und ferner vorgesehen sind:
ein Bus- und Anschlußcontrollermittel (90, 93), das mit den ersten und zweiten Systembussen (40, 50) gekoppelt ist, zum Erhalten eines Rechtes zum Benutzen der ersten und zweiten Systembusse als Reaktion auf eine Übertragungsanforderung;
ein Unterbrechungs- und Slavecontrollermittel (102, 84), das mit den ersten und zweiten Systembussen gekoppelt ist, zum Steuern einer Unterbrechung bei einer der ersten und zweiten zentralen Verarbeitungseinheiten (43, 53) und zum Steuern eines Zugriffes von der genannten einen der ersten und zweiten zentralen Verarbeitungseinheiten; und
ein Operationsbestimmungsmittel (83) zum Bestimmen einer Operation des Direktspeicherzugriffscontrollers in Abhängigkeit von der Übertragungsanforderung, davon, ob das genannte Bus- und Anschlußcontrollermittel das Recht zum Benutzen der ersten und zweiten Systembusse erhielt oder nicht, und ob der Zugriff von der genannten einen der ersten und zweiten zentralen Verarbeitungseinheiten erfolgt oder nicht,
welches Operationsbestimmungsmittel das genannte Bus- und Anschlußcontrollermittel, das genannte Puffermittel (61, 62) und das genannte Unterbrechungs- und Slavecontrollermittel auf der Grundlage der dadurch bestimmten Operation steuert, um als Reaktion auf die genannte Übertragungsanforderung eine Direktspeicherzugriffsübertragung auszuführen,
welche Busdefinitionsdaten dem genannten Bus- und Anschlußcontrollermittel, dem genannten Unterbrechungs- und Slavecontrollermittel und dem genannten Operationsbestimmungsmittel zugeführt werden, um in Abhängigkeit von den genannten Busdefinitionsdaten Operationen von ihnen zu bestimmen.

8. Der Direktspeicherzugriffscontroller nach Anspruch 7, dadurch gekennzeichnet, daß ferner vorgesehen sind:
ein Übertragungsanforderungscontrollermittel (80) zum Empfangen einer Vielzahl von Übertragungsanforderungen und zum Selektieren einer der Übertragungsanforderungen, die eine höchste Priorität hat, als die genannte Übertragungsanforderung;
ein Zentralprozessormittel (82) wenigstens zum Steuern von Übertragungsinformationen als Reaktion auf die genannte Übertragungsanforderung, die durch das genannte Übertragungsanforderungscontrollermittel selektiert wurde; und
ein Eingabe-/Ausgabecontrollermittel (97), das mit den ersten und zweiten Systembussen (40, 50) gekoppelt ist, zum Steuern der Eingabe und Ausgabe der Adresse und der Daten als Reaktion auf die Operation, die durch das genannte Operationsbestimmungsmittel (83) bestimmt wurde,
welche Busdefinitionsdaten auch dem genannten Zentralprozessormittel (82) zugeführt werden, um in Abhängigkeit von den genannten Busdefinitionsdaten eine Operation von ihm zu bestimmen.

9. Der Direktspeicherzugriffscontroller nach Anspruch 1, dadurch gekennzeichnet, daß das genannte Registermittel (106, 113) ein erstes Registermittel (106) enthält, zum Speichern der Busdefinitionsdaten, und ein zweites Registermittel (113) zum Speichern von Kanalbusattributdaten, die von einer beliebigen der ersten und zweiten zentralen Verarbeitungseinheiten (43, 53) empfangen werden und definieren, welcher Systembus durch die zentrale Verarbeitungseinheit gesteuert wird.

10. Der Direktspeicherzugriffscontroller nach Anspruch 9, dadurch gekennzeichnet, daß ferner vorgesehen sind:
ein Bus- und Anschlußcontrollermittel (90, 93), das mit den ersten und zweiten Systembussen (40, 50) gekoppelt ist, zum Erhalten eines Rechtes zum Benutzen der ersten und zweiten Systembusse als Reaktion auf eine Übertragungsanforderung;
ein Unterbrechungs- und Slavecontrollermittel (102, 84), das mit den ersten und zweiten Systembussen gekoppelt ist, zum Steuern einer Unterbrechung bei einer der ersten und zweiten zentralen Verarbeitungseinheiten (43, 53) und zum Steuern eines Zugriffes von der genannten einen der ersten und zweiten zentralen Verarbeitungseinheiten; und
ein Operationsbestimmungsmittel (83) zum Bestimmen einer Operation des Direktspeicherzugriffscontrollers in Abhängigkeit von der Übertragungsanforderung, davon, ob das genannte Bus- und Anschlußcontrollermittel das Recht zum Benutzen der ersten und zweiten Systembusse erhielt oder nicht, und ob der Zugriff von der genannten einen der ersten und zweiten zentralen Verarbeitungseinheiten erfolgt oder nicht,
welches Operationsbestimmungsmittel das genannte Bus- und Anschlußcontrollermittel, das genannte Puffermittel (61, 62) und das genannte Unterbrechungs- und Slavecontrollermittel auf der Grundlage der dadurch bestimmten Operation steuert, um als Reaktion auf die genannte Übertragungsanforderung eine Direktspeicherzugriffsübertragung auszuführen,
welche Busdefinitionsdaten und welche Kanalbusattributdaten dem genannten Bus- und Anschlußcontrollermittel, dem genannten Unterbrechungs- und Slavecontrollermittel und dem genannten Operationsbestimmungsmittel zugeführt werden, um in Abhängigkeit von den genannten Busdefinitionsdaten und den genannten Kanalbusattributdaten Operationen von ihnen zu bestimmen.

11. Der Direktspeicherzugriffscontroller nach Anspruch 10, dadurch gekennzeichnet, daß ferner vorgesehen sind:
ein Übertragungsanforderungscontrollermittel (80) zum Empfangen einer Vielzahl von Übertragungsanforderungen und zum Selektieren einer der Übertragungsanforderungen, die eine höchste Priorität hat, als die genannte Übertragungsanforderung;
ein Zentralprozessormittel (82) wenigstens zum Steuern von Übertragungsinformationen als Reaktion auf die genannte Übertragungsanforderung, die durch das genannte Übertragungsanforderungscontrollermittel selektiert wurde; und
ein Eingabe-/Ausgabecontrollermittel (97), das mit den ersten und zweiten Systembussen (40, 50) gekoppelt ist, zum Steuern der Eingabe und Ausgabe der Adresse und der Daten als Reaktion auf die Operation, die durch das genannte Operationsbestimmungsmittel (83) bestimmt wurde,
welche Busdefinitionsdaten und welche Kanalbusattributdaten auch dem genannten Zentralprozessormittel (82) zugeführt werden, um in Abhängigkeit von den genannten Busdefinitionsdaten und den genannten Kanalbusattributdaten eine Operation von ihm zu bestimmen.

12. Der Direktspeicherzugriffscontroller nach irgendeinem der Ansprüche 7 bis 11, dadurch gekennzeichnet, daß ferner vorgesehen sind:
ein Kommunikationsregistermittel (101), das mit dem genannten Operationsbestimmungsmittel (83) gekoppelt ist, zum Speichern von Nachrichten von den ersten und zweiten zentralen Verarbeitungseinheiten (43, 53);
ein Steuermittel (84, 101), das mit dem genannten Kommunikationsregistermittel gekoppelt ist, zum Ermächtigen einer der ersten und zweiten zentralen Verarbeitungseinheiten, einen Zugriff auf das genannte Kommunikationsregistermittel auszuführen, in Abhängigkeit von Übertragungsanforderungen von den ersten und zweiten zentralen Verarbeitungseinheiten; und
ein Unterbrechungscontrollermittel (102), das mit dem genannten Kommunikationsregistermittel und den ersten und zweiten Systembussen (40, 50) gekoppelt ist, zum Informieren einer der ersten und zweiten zentralen Verarbeitungseinheiten, die zu einem Ziel wird, wenn die Nachrichten in dem genannten Kommunikationsregistermittel gespeichert sind,
wobei eine Nachrichtenkommunikation zwischen den ersten und zweiten zentralen Verarbeitungseinheiten durch das genannte Kommunikationsregistermittel erfolgt.

13. Der Direktspeicherzugriffscontroller nach Anspruch 12, dadurch gekennzeichnet, daß das genannte Unterbrechungscontrollermittel (102) ein Teil des genannten Unterbrechungs- und Slavecontrollermittels (102, 84) ist.

14. Der Direktspeicherzugriffscontroller nach Anspruch 12, dadurch gekennzeichnet, daß ferner ein Busstrukturbestimmungsmittel (105) vorgesehen ist, das erste und zweite Registermittel (106, 113) enthält, zum jeweiligen Speichern von Busdefinitionsdaten, die von einer beliebigen der ersten und zweiten zentralen Verarbeitungseinheiten (43, 53) empfangen werden und eine Systemstruktur der Datenverarbeitungsvorrichtung definieren, und von Kanalbusattributdaten, die von der genannten beliebigen der ersten und zweiten zentralen Verarbeitungseinheiten empfangen werden und definieren, welcher Systembus durch die zentrale Verarbeitungseinheit gesteuert wird, welche Busdefinitionsdaten und welche Kanalbusattributdaten dem genannten Bus- und Anschlußcontrollermittel (90, 93), dem genannten Unterbrechungs- und slavecontrollermittel (102, 84), dem genannten Operationsbestimmungsmittel (83) und dem genannten Zentralprozessormittel (82) zugeführt werden, um in Abhängigkeit von den genannten Busdefinitionsdaten und den genannten Kanalbusattributdaten Operationen von ihnen zu bestimmen.

15. Der Direktspeicherzugriffscontroller nach Anspruch 10, dadurch gekennzeichnet, daß ferner vorgesehen sind: ein Kommunikationsregistermittel (101), das mit dem genannten Operationsbestimmungsmittel (83) gekoppelt ist, zum Speichern von Nachrichten von den ersten und zweiten zentralen Verarbeitungseinheiten (43, 53), ein Steuermittel (84, 101), das mit dem genannten Kommunikationsregistermittel gekoppelt ist, zum Ermächtigen einer der ersten und zweiten zentralen Verarbeitungseinheiten, einen Zugriff auf das genannte Kommunikationsregistermittel auszuführen, in Abhängigkeit von Übertragungsanforderungen von den ersten und zweiten zentralen Verarbeitungseinheiten, und ein Unterbrechungscontrollermittel (102), das mit dem genannten Kommunikationsregistermittel und den ersten und zweiten Systembussen (40, 50) gekoppelt ist, zum Informieren einer der ersten und zweiten zentralen Verarbeitungseinheiten, die zu einem Ziel wird, wenn die Nachrichten in dem genannten Kommunikationsregistermittel gespeichert sind, wobei eine Nachrichtenkommunikation zwischen den ersten und zweiten zentralen Verarbeitungseinheiten durch das genannte Kommunikationsregistermittel erfolgt.

16. Der Direktspeicherzugriffscontroller nach Anspruch 12, dadurch gekennzeichnet, daß ferner vorgesehen sind: ein Kommunikationsregistermittel (101), das mit dem genannten Operationsbestimmungsmittel (83) gekoppelt ist, zum Speichern von Nachrichten von den ersten und zweiten zentralen Verarbeitungseinheiten (43, 53), ein Steuermittel (84, 101), das mit dem genannten Kommunikationsregistermittel gekoppelt ist, zum Befähigen einer der ersten und zweiten zentralen Verarbeitungseinheiten, einen Zugriff auf das genannte Kommunikationsregistermittel auszuführen, in Abhängigkeit von Übertragungsanforderungen von den ersten und zweiten zentralen Verarbeitungseinheiten, und ein Unterbrechungscontrollermittel (102), das mit dem genannten Kommunikationsregistermittel und den ersten und zweiten Systembussen (40, 50) gekoppelt ist, zum Informieren einer der ersten und zweiten zentralen Verarbeitungseinheiten, die zu einem Ziel wird, wenn die Nachrichten in dem genannten Kommunikationsregistermittel gespeichert sind, wobei eine Nachrichtenkommunikation zwischen den ersten und zweiten zentralen Verarbeitungseinheiten durch das genannte Kommunikationsregistermittel erfolgt.

17. Der Direktspeicherzugriffscontroller nach Anspruch 15 oder 16, dadurch gekennzeichnet, daß das genannte Unterbrechungscontrollermittel (102) ein Teil des genannten Unterbrechungs- und Slavecontrollermittels (102, 84) ist.

## Revendications

1. Contrôleur d'accès direct mémoire servant à commander un accès direct mémoire dans un appareil de traitement de données qui inclut au moins des premier et second bus système (40, 50) qui sont mutuellement indépendants, des premier et second dispositifs de mémoire (41, 51) respectivement couplés aux premier et second bus système, des première et seconde interfaces d'entrée/sortie (42, 52) respectivement couplées aux premier et second bus système, au moins une unité centrale de traitement (43, 53) couplée à l'un des premier et second bus système et un moyen de tampon (61, 62) permettant de commander des transferts de données et d'adresse et un sens du transfert de données et d'adresse entre les premier et second bus système, caractérisé en ce que ledit contrôleur d'accès direct mémoire comprend :
un moyen de détermination de structure de bus (105) incluant un moyen de registre (106, 113) pour stocker au moins des données de définition de bus qui sont reçues par l'unité centrale de traitement (43, 53) et qui définissent une structure système de l'appareil de traitement de données.

2. Contrôleur d'accès direct mémoire selon la revendication 1, caractérisé en ce que sont en outre prévus :
un moyen de contrôleur de bus et de terminal (90, 93) couplé aux premier et second bus système (40, 50) pour obtenir un droit d'utiliser les premier et second bus système en réponse à une requête de transfert ;
un moyen de contrôleur d'interruption et d'esclave (102, 84) couplé aux premier et second bus système pour commander une interruption sur l'unité centrale de traitement (43, 53) et pour commander un accès depuis l'unité centrale de traitement ; et
un moyen de détermination de fonctionnement (83) pour déterminer un fonctionnement du contrôleur d'accès direct mémoire en fonction de la requête de transfert, selon que oui ou non ledit moyen de contrôleur de bus et de terminal a obtenu le droit d'utiliser les premier et second bus système et selon que oui ou non l'accès est réalisé depuis l'unité centrale de traitement,
ledit moyen de détermination de fonctionnement commandant ledit moyen de contrôleur de bus et de terminal, ledit moyen de tampon (61, 62) et ledit moyen de contrôleur d'interruption et d'esclave sur la base du fonctionnement ainsi déterminé de manière à réaliser un transfert d'accès direct mémoire en réponse à ladite requête de transfert,
lesdites données de définition de bus étant appliquées sur ledit moyen de contrôleur de bus et de terminal, sur ledit moyen de contrôleur d'interruption et d'esclave et sur ledit moyen de détermination de fonctionnement de manière à déterminer leurs fonctionnements en fonction desdites données de définition de bus.

3. Contrôleur d'accès direct mémoire selon la revendication 2, caractérisé en ce que sont en outre prévus :
un moyen de contrôleur de requête de transfert (80) pour recevoir une pluralité de requêtes de transfert et pour sélectionner l'une des requêtes de transfert présentant une priorité la plus élevée en tant que dite requête de transfert ;
un moyen de processeur central (82) pour au moins commander une information de transfert en réponse à ladite requête de transfert sélectionnée par ledit moyen de contrôleur de requête de transfert ; et
un moyen de contrôleur d'entrée/sortie (97) couplé aux premier et second bus système (40, 50) pour commander une entrée et une sortie de l'adresse et des données en réponse au fonctionnement déterminé par ledit moyen de détermination de fonctionnement (83),
lesdites données de définition de bus étant aussi appliquées sur ledit moyen de processeur central (82) de manière à déterminer son fonctionnement en fonction desdites données de définition de bus.

4. Contrôleur d'accès direct mémoire selon la revendication 1, caractérisé en ce que ledit moyen de registre (106, 113) inclut un premier moyen de registre (106) pour stocker les données de définition de bus et un second moyen de registre (113) pour stocker des données d'attribut de bus de canal qui sont reçues par l'unité centrale de traitement (43, 53) et qui définissent quel bus système est commandé par l'unité centrale de traitement.

5. Contrôleur d'accès direct mémoire selon la revendication 4, caractérisé en ce que sont en outre prévus :
un moyen de contrôleur de bus et de terminal (90, 93) couplé aux premier et second bus système (40, 50) pour obtenir un droit d'utiliser les premier et second bus système en réponse à une requête de transfert ;
un moyen de contrôleur d'interruption et d'esclave (102, 84) couplé aux premier et second bus système pour commander une interruption sur l'unité centrale de traitement (43, 53) et pour commander un accès depuis l'unité centrale de traitement ; et
un moyen de détermination de fonctionnement (83) pour déterminer un fonctionnement du contrôleur d'accès direct mémoire en fonction de la requête de transfert, selon que oui ou non ledit moyen de contrôleur de bus et de terminal a obtenu le droit d'utiliser les premier et second bus système et selon que oui ou non l'accès est réalisé depuis l'unité centrale de traitement,
ledit moyen de détermination de fonctionnement commandant ledit moyen de contrôleur de bus et de terminal, ledit moyen de tampon (61, 62) et ledit moyen de contrôleur d'interruption et d'esclave sur la base du fonctionnement ainsi déterminé de manière à réaliser un transfert d'accès direct mémoire en réponse à ladite requête de transfert,
lesdites données de définition de bus et lesdites données d'attribut de bus de canal étant appliquées sur ledit moyen de contrôleur de bus et de terminal, sur ledit moyen de contrôleur d'interruption et d'esclave et sur ledit moyen de détermination de fonctionnement de manière à déterminer leurs fonctionnements en fonction desdites données de définition de bus et desdites données d'attribut de bus de canal.

6. Contrôleur d'accès direct mémoire selon la revendication 5, caractérisé en ce que sont en outre prévus :
un moyen de contrôleur de requête de transfert (80) pour recevoir une pluralité de requêtes de transfert et pour sélectionner l'une des requêtes de transfert présentant une priorité la plus élevée en tant que dite requête de transfert ;
un moyen de processeur central (82) pour commander au moins une information de transfert en réponse à ladite requête de transfert sélectionnée par ledit moyen de contrôleur de requête de transfert ; et
un moyen de contrôleur d'entrée/sortie (97) couplé aux premier et second bus système (40, 50) pour commander une entrée et une sortie de l'adresse et des données en réponse au fonctionnement déterminé par ledit moyen de détermination de fonctionnement (83),
lesdites données de définition de bus et lesdites données d'attribut de bus de canal étant aussi appliquées sur ledit moyen de processeur central (82) de manière à déterminer son fonctionnement en fonction desdites données de définition de bus et desdites données d'attribut de bus de canal.

7. Contrôleur d'accès direct mémoire selon la revendication 1, caractérisé en ce que les première et seconde unités centrales de traitement (43, 53) sont prévues et en ce que sont en outre prévus :
un moyen de contrôleur de bus et de terminal (90, 93) couplé aux premier et second bus système (40, 50) pour obtenir un droit d'utiliser les premier et second bus système en réponse à une requête de transfert ;
un moyen de contrôleur d'interruption et d'esclave (102, 84) couplé aux premier et second bus système pour commander une interruption sur l'une des première et seconde unités centrales de traitement (43, 53) et pour commander un accès depuis ladite une des première et seconde unités centrales de traitement ; et
un moyen de détermination de fonctionnement (83) pour déterminer un fonctionnement du contrôleur d'accès direct mémoire en fonction de la requête de transfert, selon que oui ou non le moyen de contrôleur de bus et de terminal a obtenu le droit d'utiliser les premier et second bus système et selon que oui ou non l'accès est réalisé depuis ladite une des première et seconde unités centrales de traitement,
ledit moyen de détermination de fonctionnement commandant ledit moyen de contrôleur de bus et de terminal, ledit moyen de tampon (61, 62) et ledit contrôleur d'interruption et d'esclave sur la base du fonctionnement ainsi déterminé de manière à réaliser un transfert d'accès direct mémoire en réponse à ladite requête de transfert,
lesdites données de définition de bus étant appliquées sur ledit moyen de contrôleur de bus et de terminal, sur ledit moyen de contrôleur d'interruption et d'esclave et sur ledit moyen de détermination de fonctionnement de manière à déterminer leurs fonctionnements en fonction desdites données de définition de bus.

8. Contrôleur d'accès direct mémoire selon la revendication 7, caractérisé en ce que sont en outre prévus :
un moyen de contrôleur de requête de transfert (80) pour recevoir une pluralité de requêtes de transfert et pour sélectionner l'une des requêtes de transfert présentant une priorité la plus élevée en tant que dite requête de transfert ;
un moyen de processeur central (82) pour au moins commander une information de transfert en réponse à ladite requête de transfert sélectionnée par ledit moyen de contrôleur de requête de transfert ; et
un moyen de contrôleur d'entrée/sortie (97) couplé aux premier et second bus système (40, 50) pour commander une entrée et une sortie de l'adresse et des données en réponse au fonctionnement déterminé par ledit moyen de détermination de fonctionnement (83),
lesdites données de définition de bus étant aussi appliquées sur ledit moyen de processeur central (82) de manière à déterminer son fonctionnement en fonction desdites données de définition de bus.

9. Contrôleur d'accès direct mémoire selon la revendication 1, caractérisé en ce que ledit moyen de registre (106, 113) inclut un premier moyen de registre (106) pour stocker les données de définition de bus et un second moyen de registre (113) pour stocker des données d'attribut de bus de canal qui sont reçues par l'une arbitraire des première et seconde unités centrales de traitement (43, 53) et qui définissent quel système de bus est commandé par l'unité centrale de traitement.

10. Contrôleur d'accès direct mémoire selon la revendication 9, caractérisé en ce que sont en outre prévus :
un moyen de contrôleur de bus et de terminal (90, 93) couplé aux premier et second bus système (40, 50) pour obtenir un droit d'utiliser les premier et second bus système en réponse à une requête de transfert ;
un moyen de contrôleur d'interruption et d'esclave (102, 84) couplé aux premier et second bus système pour commander une interruption de l'une des première et seconde unités centrales de traitement (43, 53) et pour commander un accès depuis ladite une des première et seconde unités centrales de traitement ; et
un moyen de détermination de fonctionnement (83) pour déterminer un fonctionnement du contrôleur d'accès direct mémoire en fonction de la requête de transfert, selon que oui ou non ledit moyen de contrôleur de bus et de terminal a obtenu le droit d'utiliser les premier et second systèmes de bus et selon que oui ou non l'accès est réalisé depuis ladite une des première et seconde unités centrales de traitement,
ledit moyen de détermination de fonctionnement commandant ledit moyen de contrôleur de bus et de terminal, ledit moyen de tampon (61, 62) et ledit moyen de contrôleur d'interruption et d'esclave sur la base du fonctionnement ainsi déterminé de manière à réaliser un transfert d'accès direct mémoire en réponse à ladite requête de transfert,
lesdites données de définition de bus et lesdites données d'attribut de bus de canal étant appliquées sur ledit moyen de contrôleur de bus et de terminal, sur ledit moyen de contrôleur d'interruption et d'esclave et sur ledit moyen de détermination de fonctionnement de manière à déterminer leurs fonctionnements en fonction desdites données de définition de bus et desdites données d'attribut de bus de canal.

11. Contrôleur d'accès direct mémoire selon la revendication 10, caractérisé en ce que sont en outre prévus :
un moyen de contrôleur de requête de transfert (80) pour recevoir une pluralité de requêtes de transfert et pour sélectionner l'une des requêtes de transfert présentant une priorité la plus élevée en tant que dite requête de transfert ;
un moyen de processeur central (82) pour au moins commander une information de transfert en réponse à ladite requête de transfert sélectionnée par ledit moyen de contrôleur de requête de transfert ; et
un moyen de contrôleur d'entrée/sortie (97) couplé aux premier et second bus système (40, 50) pour commander une entrée et une sortie de l'adresse et des données en réponse au fonctionnement déterminé par ledit moyen de détermination de fonctionnement (83),
lesdites données de définition de bus et lesdites données d'attribut de bus de canal étant aussi appliquées sur ledit moyen de processeur central (82) de manière à déterminer son fonctionnement en fonction desdites données de définition de bus et desdites données d'attribut de bus de canal.

12. Contrôleur d'accès direct mémoire selon l'une quelconque des revendications 7 à 11, caractérisé en ce que sont en outre prévus :
un moyen de registre de communication (101) couplé audit moyen de détermination de fonctionnement (83) pour stocker des messages provenant des première et seconde unités centrales de traitement (43, 53) ;
un moyen de commande (84, 101) couplé audit moyen de registre de communication pour permettre à l'une des première et seconde unités centrales de traitement de réaliser un accès audit moyen de registre de communication en fonction de requêtes de transfert provenant des première et seconde unités centrales de traitement ; et
un moyen de contrôleur d'interruption (102) couplé audit moyen de registre de communication et aux premier et second bus système (40, 50) pour informer l'une des première et seconde unités centrales de traitement du fait qu'elle devient une destination lorsque les messages sont stockés dans ledit moyen de registre de communication,
une communication de message entre les première et seconde unités centrales de traitement étant réalisée par l'intermédiaire dudit moyen de registre de communication.

13. Contrôleur d'accès direct mémoire selon la revendication 12, caractérisé en ce que ledit moyen de contrôleur d'interruption (102) est une partie dudit moyen de contrôleur d'interruption et d'esclave (102, 84).

14. Contrôleur d'accès direct mémoire selon la revendication 12, caractérisé en ce que sont en outre prévus un moyen de détermination de structure de bus (105) incluant des premier et second moyens de registre (106, 113) pour stocker respectivement des données de définition de bus qui sont reçues par l'une arbitraire des première et seconde unités centrales de traitement (43, 53) et qui définissent une structure de système de l'appareil de traitement de données et des données d'attribut de bus de canal qui sont reçues par ladite une arbitraire des première et seconde unités centrales de traitement et qui définissent quel bus système est commandé par l'unité centrale de traitement, lesdites données de définition de bus et lesdites données d'attribut de bus de canal étant appliquées sur ledit moyen de contrôleur de bus et de terminal (90, 93), sur ledit moyen de contrôleur d'interruption et d'esclave (102, 84), sur ledit moyen de détermination de fonctionnement (83) et sur ledit moyen de processeur central (82) de manière à déterminer leurs fonctionnements en fonction desdites données de définition de bus et desdites données d'attribut de bus de canal.

15. Contrôleur d'accès direct mémoire selon la revendication 10, caractérisé en ce que sont en outre prévus un moyen de registre de communication (101) couplé audit moyen de détermination de fonctionnement (83) pour stocker des messages provenant des première et seconde unités centrales de traitement (43, 53), un moyen de commande (84, 101) couplé audit moyen de registre de communication pour valider l'une des première et seconde unités centrales de traitement afin de réaliser un accès audit moyen de registre de communication en fonction de requêtes de transfert provenant des première et seconde unités centrales de traitement, et un moyen de contrôleur d'interruption (102) couplé audit moyen de registre de communication et aux premier et second bus système (40, 50) pour informer l'une des première et seconde unités centrales de traitement du fait qu'elle devient une destination lorsque les messages sont stockés dans ledit moyen de registre de communication, une communication de message entre les première et seconde unités centrales de traitement étant réalisée au travers dudit moyen de registre de communication.

16. Contrôleur d'accès direct mémoire selon la revendication 12, caractérisé en ce que sont en outre prévus un moyen de registre de communication (101) couplé audit moyen de détermination de fonctionnement (83) pour stocker des messages provenant des première et seconde unités centrales de traitement (43, 53), un moyen de command (84, 101) couplé audit moyen de registre de communication pour valider l'une des première et seconde unités centrales de traitement afin de réaliser un accès audit moyen de registre de communication en fonction de requêtes de transfert provenant des première et seconde unités centrales de traitement, et un moyen de contrôleur d'interruption (102) couplé audit moyen de registre de communication et aux premier et second bus système (40, 50) pour informer l'une des première et seconde unités centrales de traitement du fait qu'elle devient une destination lorsque les messages sont stockés dans ledit moyen de registre de communication, une communication de message entre les première et seconde unités centrales de traitement étant réalisée au travers dudit moyen de registre de communication.

17. Contrôleur d'accès direct mémoire selon la revendication 15 ou 16, caractérisé en ce que ledit moyen de contrôleur d'interruption (102) constitue une partie dudit moyen de contrôleur d'interruption et d'esclave (102, 84).
